# EUROPÄISCHE PATENTSCHRIFT

(11) **EP 3 765 721 B1**
(45) Veröffentlichungstag und Bekanntmachung des Hinweises auf die Patenterteilung: **14.02.2024**
(21) Anmeldenummer: 19712927.3
(22) Anmeldetag: 14.03.2019
(51) Int. Cl.: F02B 19/10, F02B 23/10, F02B 19/12, F02B 23/00, F02B 19/18, F02B 43/00

(54) **KOLBENMULDENGEOMETRIEN UND ZÜNDKAMMERFORMEN, INSBESONDERE FÜR EIN DURCH EINE ZÜNDKAMMER GEZÜNDETES MAGERES ERDGASBRENNVERFAHREN**
PISTON BOWL GEOMETRIES AND IGNITION CHAMBER FORMS, IN PARTICULAR FOR A LEAN NATURAL GAS COMBUSTION METHOD IGNITED VIA AN IGNITION CHAMBER
GÉOMÉTRIES DE CAVITÉS DE PISTON ET FORMES DE CHAMBRES D'ALLUMAGE, EN PARTICULIER POUR UN PROCÉDÉ DE COMBUSTION DE GAZ NATUREL PAUVRE AMORCÉ PAR UNE CHAMBRE D'ALLUMAGE

(30) Priorität: 16.03.2018 DE 102018002468; 05.07.2018 DE 102018116348
(43) Veröffentlichungstag der Anmeldung: 20.01.2021
(73) Patentinhaber: VOLKSWAGEN AG, 38440 Wolfsburg (DE)
(72) Erfinder: LUKAS, Gwendal, 38112 Braunschweig (DE); BERGER, Frank, 38446 Wolfsburg (DE); WEISSNER, Michael, 38442 Wolfsburg (DE); KLÜTING, Christian, 38440 Wolfsburg (DE)
(74) Vertreter: Gulde & Partner
(86) Internationale Anmeldenummer: PCT/EP2019/056433
(87) Internationale Veröffentlichungsnummer: WO 2019/175318

(56) Entgegenhaltungen:
- EP-A1- 3 056 710
- US-A1- 2016 047 295
- US-A1- 2016 273 443

## Beschreibung

Die Erfindung betrifft Kolbenmuldengeometrien und Zündkammerformen einer Verbrennungskraftmaschine, umfassend wenigstens einen in einem Zylinder ausgebildeten Hauptbrennraum oberhalb des einen beweglich Kolben aufnehmenden Zylinders, wobei der Hauptbrennraum aus einem Zündkammerraum einer Zündkammer, die mit einem Brennstoffzufuhrsystem verbunden ist, mit einer Zündkammerladung gasförmigen Kraftstoffs versorgt wird, wobei dem wenigstens einen Hauptbrennraum zudem eine Hauptbrennraumladung gasförmigen Kraftstoffs zugeführt wird.

Als Stand der Technik werden die Druckschriften EP 3 056 710 A1, US 2016/273443 A1, US 2016/047295 A1, WO 2014 037 068 A1, DE 10 2015 202 193 A1, DE 10 2012 103 206 A1, DE 10 2009 010 729 A1 und DE 100 523 36 A1 genannt. Die Druckschriften offenbaren zusammengefasst verschieden ausgestaltete Kolben und deren Kolbenmulden, die in Zylindern von Verbrennungskraftmaschinen angeordnet sind, wobei die in den Zylindern unter Verwendung der beschriebenen Kolben geometrisch ausgebildeten Brennräume insbesondere zur Verbrennung von gasförmigen Kraftstoffen vorgesehen sind. Der Erfindung liegt nun die Aufgabe zugrunde, für eine Verbrennungskraftmaschine, die bevorzugt mit einem gasförmigen Kraftstoff betrieben wird, eine Anordnung zur Verbrennung des gasförmigen Kraftstoffs und ein zugehöriges Verbrennungsverfahren zu schaffen, das einen guten Ausbrand gewährleistet, wodurch insbesondere die HC-Emissionen reduziert werden und einen hohen Wirkungsgrad aufweisen soll.

Ausgangspunkt der Erfindung ist eine Verbrennungskraftmaschine, wenigstens einen in einem Zylinder ausgebildeten Hauptbrennraum oberhalb eines beweglichen Kolbens, der in dem Zylinder angeordnet ist, wenigstens einen in einem Zylinder ausgebildeten Hauptbrennraum oberhalb eines einen beweglichen Kolben aufnehmenden Zylinders, wobei der Hauptbrennraum aus einem Zündkammerraum einer Zündkammer, die mit einem Brennstoffzufuhrsystem verbunden ist, mit einer Zündkammerladung gasförmigen Kraftstoffs versorgt wird, wobei dem wenigstens einen Hauptbrennraum zudem eine Hauptbrennraumladung gasförmigen Kraftstoffs zugeführt wird, wobei der Zündkammer eine Zündquelle zugeordnet ist, die den gasförmigen Brennstoff in dem Zündkammerraum der Zündkammer zu einem vorgebbaren Zeitpunkt zündet, wodurch gezündete reaktive Gasstrahlen in den Hauptbrennraum schießen und im Hauptbrennraum unter Zündung der Hauptbrennraumladung gemeinsam mit der Zündkammerladung verbrennen, wonach das Abgas aus dem mindestens einen Hauptbrennraum abgeführt wird, wobei die Zündkammer Schusskanäle zur gerichteten Einbringung von gezündeten reaktiven Gasstrahlen in den Hauptbrennraum aufweist, der von einem Hauptbrennraumdach des Zylinders und einer in dem beweglichen Kolben ausgebildeten Kolbenmulde begrenzt ist.

Erfindungsgemäß ist vorgesehen, dass mehrere reaktive Gasstrahlen bei einer vorgebbaren Position des Kolbens im Zylinder auf einen primären Zündbereich in der Kolbenmulde des Kolben gerichtet sind, der zwischen einem zentralen Bereich und einem im Randbereich der Kolbenmulde liegenden Quetschkantenbereich einer geometrisch spezifisch ausgebildeten Kolbenmulde liegt.

Als zentraler Bereich wird der Bereich nahe einer Mittelachse der Kolbenmulde des beweglichen Kolbens angesehen.

Als primärer Zündbereich wird das Volumen in dem Hauptbrennraum angesehen, der beim Einschießen der reaktiven Gasstrahlen in den Hauptbrennraum von den reaktiven Gasstrahlen erfasst wird. Als sekundärer Bereich wird das Volumen des Hauptbrennraums angesehen, das sich an das durch den primären Zündbereich erfasste Volumen anschließt, wobei sich im Grenzbereich zwischen primärem Zündbereich und sekundärem Bereich eine Flammenfront ausbildet, die sich von dem Grenzbereich in Richtung der Kolbenmulde des beweglichen Kolbens ausbreitet.

Die Hauptbrennraumladung wird durch äußere oder innere Gemischbildung in den Hauptbrennraum eingebracht.

Bei der äußeren Gemischbildung wird ein gasförmiges Kraftstoff/Luft-Gemisch außerhalb des Hauptbrennraums erzeugt und über mindestens ein Einlassventil in den Hauptbrennraum eingebracht.

Bei der inneren Gemischbildung wird ein gasförmiges Kraftstoff/Luft-Gemisch innerhalb des Hauptbrennraums erzeugt und über mindestens ein Einlassventil wird Verbrennungsluft und über ein Einblaselement, insbesondere ein Einblasventil, wird gasförmiger Kraftstoff in den Hauptbrennraum eingebracht.

Als Ladung wird die Masse des Kraftstoff/Luft-Gemisches im Zündkammerraum und im Hauptbrennraum definiert.

Bevorzugt vorgesehen ist, dass im Zündkammerraum und im Hauptbrennraum der gleiche gasförmige Brennstoff verwendet wird. Die Zündkammerladung ist dabei mindestens so fett, wie die Hauptbrennraumladung, wobei insbesondere vorgesehen ist, dass die Zündkammerladung ein fetteres Kraftstoff/Luft-Gemisch-Verhältnis von beispielsweise λ = 1 und die Hauptbrennraumladung ein mageres Kraftstoff/Luft-Gemisch-Verhältnis von beispielsweise von λ = 1,5 aufweist, sodass unter Berücksichtigung der eingebrachten Mengen im Hauptbrennraum insgesamt ein mageres Erdgasbrennverfahren mit einem Kraftstoff-Luftgemisch-Verhältnis λ > 1 realisierbar ist.

Bevorzugt ist vorgesehen, dass die spezifisch ausgebildete Kolbenmulde einen Quetschkantenbereich mit abgerundeten Quetschkanten aufweist.

Ferner ist bevorzugt vorgesehen, dass die geometrisch spezifisch ausgebildete Kolbenmulde in einer ersten Ausführungsform die nicht Teil der Erfindung ist, eine Omega-Form aufweist, die im Quetschkantenbereich abgerundet ist.

In einer anderen Ausführungsform ist vorgesehen, dass die geometrisch spezifisch ausgebildete Kolbenmulde eine hemisphärische Form aufweist, die im Quetschkantenbereich ebenfalls abgerundet ist.

Insofern ist in der ersten Ausführungsform bevorzugt vorgesehen, dass mehrere reaktive Gasstrahlen auf den primären Zündbereich der geometrisch spezifisch ausgebildeten Kolbenmulde in der Omega-Form gerichtet sind.

In der anderen zweiten Ausführungsform, die Teil der Erfindung ist, ist bevorzugt vorgesehen, dass mehrere reaktive Gasstrahlen auf den primären Zündbereich der geometrisch spezifisch ausgebildeten Kolbenmulde in der hemisphärischen Form gerichtet sind.

Außerdem ist in Bezug auf die Kolbenmulde in der hemisphärischer Form vorgesehen, dass mindestens ein weiterer reaktiver Gasstrahl bei der vorgegebenen Position des beweglichen Kolbens im Zylinder auf den zentralen Bereich - nahe der Mittelachse der Kolbenmulde - der geometrisch spezifisch ausgebildeten Kolbenmulde in der hemisphärischen Form gerichtet ist. In der Erfindung sind sieben reaktive Gasstrahlen - auf den Umfang der im Wesentlichen kreisförmigen Zündkammer (mit gleichem Winkelabstand) gleichmäßig verteilt - auf den primären Zündbereich der geometrisch spezifisch ausgebildeten hemisphärischen Kolbenmulde in der hemisphärischen Form gerichtet.

In weiterer bevorzugter Ausgestaltung der Erfindung ist mindestens ein reaktiver Gasstrahl, bevorzugt drei reaktive Gasstrahlen - auf den Umfang der im Wesentlichen kreisförmigen Zündkammer (mit gleichem Winkelabstand) gleichmäßig verteilt - auf den zentralen Bereich der geometrisch spezifisch ausgebildeten Kolbenmulde in der hemisphärischen Form gerichtet.

In bevorzugter Ausgestaltung der Erfindung weisen die abgerundeten Quetschkanten der spezifisch ausgebildeten omegaförmigen oder hemisphärischen Kolbenmulde im Quetschkantenbereich einen stumpfen Quetschkantenwinkel auf, der zwischen einer Geraden entlang des Hauptbrennraumdachs und einer Tangente entlang eines Randbereiches der Kolbenmulden auf der Kolbenseite des Kolbens gebildet ist.

Radiale Ausrichtung der reaktiven Gasstrahlen im primären Zündbereich und im zentralen Zündbereich:
Im Detail ist erfindungsgemäß bevorzugt vorgesehen, dass die mehreren reaktiven Gasstrahlen, die bei der vorgegebenen Position des Kolbens im Zylinder auf den primären und zentralen Zündbereich der hemisphärischen Kolbenmulde des Kolbens gerichtet sind, in einem Höhenwinkelbereich radial zur Mittellinie der Kolbenlaufbahn der Verbrennungskraftmaschine ausgerichtet sind, wobei der jeweilige Winkel zwischen der Kolbenlaufbahn und einer Schusskanalachse der Schusskanäle einen Gasstrahl definiert.

### • Spezifische radiale Ausrichtung der reaktiven Gasstrahlen im primären Zündbereich.

Mit anderen Worten, die mehreren reaktiven Gasstrahlen werden gegenüber der Mittellinie der Kolbenlaufbahn (die entlang einer Längserstreckung eines Zylinders der Verbrennungskraftmaschine orientiert ist) im Höhenwinkelbereich zwischen 30° und 80° schirmartig aufgespannt, beziehungsweise in Richtung 80° angehoben, weshalb nachfolgend von dem jeweiligen Höhenwinkel des primären Zündbereichs gesprochen wird.

Ein bevorzugter Höhenwinkel des primären Zündbereichs innerhalb des Höhenwinkelbereichs von 30° bis 80° beträgt 65°.

### • Spezifische radiale Ausrichtung der reaktiven Gasstrahlen im zentralen Zündbereich.

Erfindungsgemäß ist weiter bevorzugt vorgesehen, dass mindestens ein reaktiver Gasstrahl bei der vorgegebenen Position des Kolbens im Zylinder auf den zentralen Bereich der geometrisch spezifisch ausgebildeten hemisphärischen Kolbenmulde in einem Höhenwinkelbereich zwischen 0° und 30° radial zur Mittellinie der Kolbenlaufbahn der Verbrennungskraftmaschine ausgerichtet ist, wobei der jeweilige Winkel zwischen der Kolbenlaufbahn und einer Schusskanalachse der Schusskanäle eines Gasstrahles definiert ist.

Mit anderen Worten, der mindestens eine reaktive Gasstrahl, der auf den zentralen Bereich der geometrisch spezifisch ausgebildeten hemisphärischen Kolbenmulde ausgerichtet ist, wird gegenüber der Mittellinie der Kolbenlaufbahn (die entlang einer Längserstreckung eines Zylinders der Verbrennungskraftmaschine orientiert ist) im Höhenwinkelbereich zwischen 0° und 30° schirmartig aufgespannt, beziehungsweise zwischen 0° und 30° festgelegt, weshalb nachfolgend ebenfalls von dem jeweiligen Höhenwinkel des zentralen Bereiches gesprochen wird.

Ein bevorzugter Höhenwinkel des zentralen Bereiches innerhalb des Höhenwinkelbereichs zwischen 0° und 30° beträgt 10°.

Tangentiale Ausrichtung der reaktiven Gasstrahlen im primären Zündbereich und im zentralen Zündbereich.

Schließlich ist in einer bevorzugten Ausführungsvariante noch vorgesehen, dass die mehreren reaktiven Gasstrahlen des primären Zündbereichs (erste und zweite Ausführungsform) und/oder der mindestens eine weitere reaktive Gasstrahl des zentralen Bereichs (zweite Ausführungsform) zusätzlich zu der schirmartigen Ausrichtung gegenüber der Mittellinie der Kolbenlaufbahn der Verbrennungskraftmaschine in einem Kippwinkelbereich in Umfangsrichtung gegenüber der Achse in Längserstreckung der Verbrennungskraftmaschine gesehen - gekippt sind.

Der Winkel (Kippwinkel) ist zwischen den radial ausgerichteten Schusskanalachsen der Schusskanäle der reaktiven Gasstrahlen und der Kippung in Umfangsrichtung definiert, sodass die mehreren reaktiven Gasstrahlen und/oder der mindestens eine weitere reaktive Gasstrahl radial um den Höhenwinkel gegenüber der Längserstreckung ausgerichtet und zusätzlich um den Winkel in Umfangsrichtung gekippt sind.

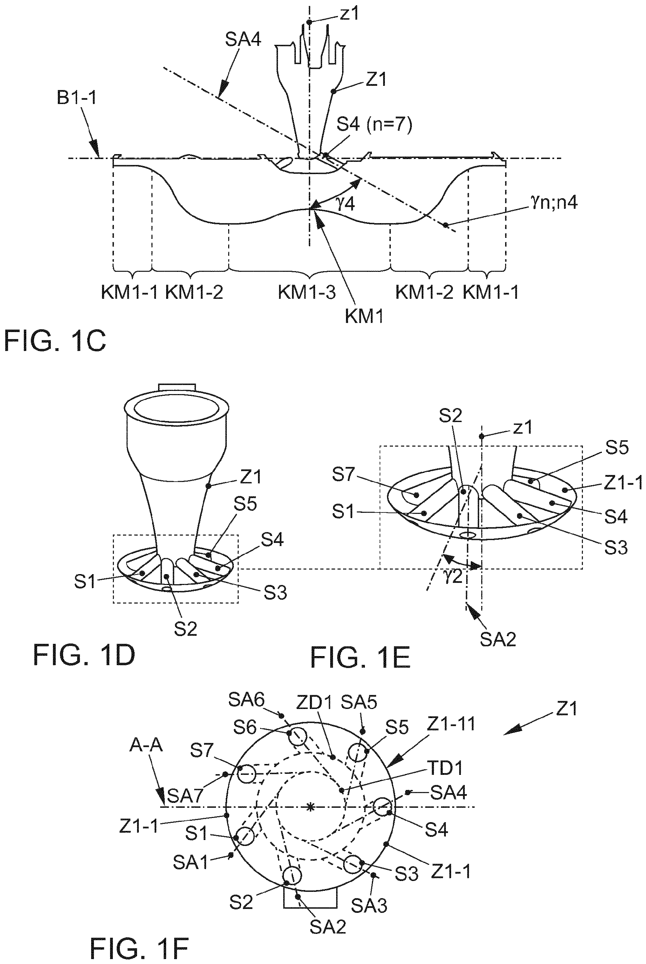

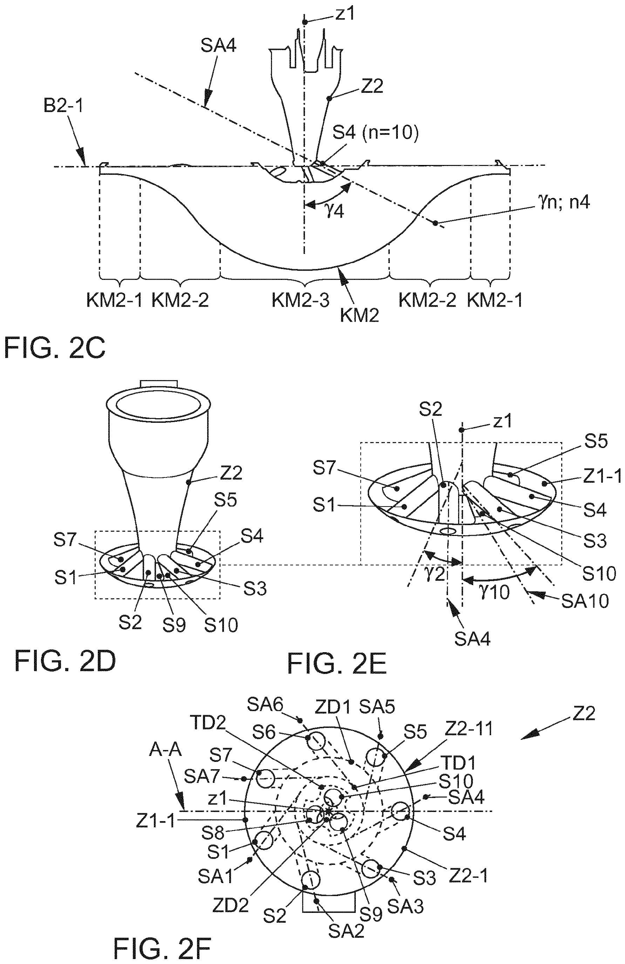

Die Kippwinkel sind mit anderen Worten als Winkel definiert, die von den Schusskanalachsen der Bohrungen ausgebildeten Schusskanäle ausgehend, entweder alle durch einen Punkt auf der Längsachse der Kolbenlaufbahn verlaufen (Kippwinkel = 0°) oder exzentrisch_(Kippwinkel > 0°) angeordnet sind, sodass die Schusskanalachsen nicht durch einen gemeinsamen Punkt durch die Längsachse (vergleiche Figuren 1F und 2F) der Kolbenlaufbahn verlaufen.

Dabei bilden die Schusskanalachsen bei einem Kippwinkel > 0° Tangenten an einem gedachten vorgebbaren sogenannten Tangential-Kreis.

Die gedachten vorgebbaren Tangential-Kreise, von denen die auf den jeweiligen Zündkammerkreisen der Schusskanalbohrungen des primären Zündbereichs und des zentralen Zündbereichs (mit gleichem Winkelabstand) gleichmäßig verteilten Schusskanalachsen ausgehen, liegen bei einem Kippwinkel > 0° tangentenartig an den Tangential-Kreisen an. Der jeweilige Zündkammerkreis ist durch die Austrittspunkte der Schusskanalbohrungen in der Zündkammer definiert.

### • Spezifische tangentiale Ausrichtung der reaktiven Gasstrahlen im primären Zündbereich.

Es ist vorgesehen, dass der Durchmesser des primären Tangential-Kreises des primären Zündbereichs ¾ bis ¼ des durch die Austrittspunkte definierten Durchmessers des Zündkammerkreises des primären Zündbereichs beträgt.

### • Spezifische tangentiale Ausrichtung der reaktiven Gasstrahlen im zentralen Zündbereich.

Erfindungsgemäß ist vorgesehen, dass der den Drall erzeugende Kippwinkelbereich dadurch definiert ist, dass ein kleinster Durchmesser des Zündkammerkreises größer/gleich (>/=) dem Durchmesser der Austrittspunkte der Schusskanalbohrungen aus der Zündkammer im zentralen Zündbereich ist, wobei die Schusskanalbohrungen auch im zentralen Zündbereich (analog zu dem primären Zündbereich) verschneidungsfrei angeordnet sind.

Erfindungsgemäß ist weiter definiert, dass der größte Durchmesser des Zündkammerkreises im zentralen Zündbereich kleiner/gleich (</=) dem Durchmesser ist, auf dem die Austrittspunkte der Schusskanalbohrungen des primären Zündbereichs auf der Innenseite die Kammerwand der ersten oder zweiten Zündkammer ZK1, ZK2 durchstoßen, wobei von diesem Durchmesser der Bohrungsdurchmesser der Schusskanalbohrungen des zentralen Zündbereichs abzuziehen ist.

Die Austrittspunkte der Schusskanalbohrungen im zentralen Bereich liegen in Abhängigkeit des Durchmessers des zentralen Zündkammerkreises tangential an dem ausgewählten Durchmesser des zentralen Tangential-Kreises an.

Erfindungsgemäß ist bevorzugt vorgesehen, dass der Durchmesser des zentralen Tangential-Kreises des zentralen Zündbereichs ¾ bis ¼ des Durchmessers des Zündkammerkreises des zentralen Zündbereichs beträgt.

### • Verhältnis der radiale Ausrichtung der reaktiven Gasstrahlen im primären Zündbereich in Bezug auf die radiale Ausrichtung der reaktiven Gasstrahlen im zentralen Zündbereich.

Der Höhenwinkel der reaktiven Gasstrahlen im primären Zündbereich ist stets größer als der Höhenwinkel der reaktiven Gasstrahlen im zentralen Zündbereich, wobei eine Differenz zwischen dem Höhenwinkel der reaktiven Gasstrahlen im primären Zündbereich und dem Höhenwinkel der reaktiven Gasstrahlen im zentralen Zündbereich mindestens größer/gleich (</=) 5° beträgt.

Außerdem wird hinsichtlich der Zündkammerausgestaltung erfindungsgemäß beansprucht, dass die Zündkammer eine Mantelfläche aufweist, die im Bereich der Bohrungen der Schusskanäle als gerundeter Kegelstumpf ausgebildet ist, wobei die Bohrungsöffnungen der Schusskanäle der mehreren reaktiven Gasstrahlen in einem Rand eines Zündkammerdoms der Zündkammer außerhalb einer zu dem Kolben gerichteten abgerundeten Deckfläche des randseitig gerundeten Kegelstumpfes angeordnet sind.

Zuletzt wird hinsichtlich der Zündkammerausgestaltung erfindungsgemäß beansprucht, dass die Zündkammer zumindest im Randbereich eine Mantelfläche in der Form eines gerundeten Kegelstumpfes aufweist, wobei die Bohrungsöffnung/en des Schusskanales oder der Schusskanäle des mindestens einen weiteren zentral - nahe der Mittelachse der Kolbenmulde - ausgerichteten reaktiven Gasstrahles in der ebenfalls abgerundeten Deckfläche des Zündkammerdoms angeordnet ist.

Durch diese erfindungsgemäßen Ausgestaltungen wird in vorteilhafter Weise erreicht, dass die Schusskanalbohrungen aller beschriebenen Schusskanäle im Austrittsbereich aus der Zündkammer gegenüber der Zündkammerwandung nahezu gerade ausgebildet sind und somit an der Zündkammerwandung gerade und nicht schräg abgeschnitten sind. Durch diese Lösung ist eine genauere Orientierung der ausgerichteten reaktiven Gasstrahlen gewährleistet.

Mit anderen Worten, die Schnittflächen der Schusskanalaustritte der Schusskanalbohrungen verlaufen bezüglich der Zündkammermantelfläche orthogonal zu den zentral und gerade durch dir Bohrungen verlaufenden Schusskanalachsen.

Dabei ist ergänzend vorgesehen, dass die Oberfläche der Zündkammerinnenmantelfläche möglichst klein gehalten wird.

Die Erfindung wird nachfolgend in Ausführungsbeispielen anhand der zugehörigen Zeichnungen erläutert. Es zeigen:
- Figur 1A: eine perspektivische Darstellung eines ersten Hauptbrennraums einer Verbrennungskraftmaschine in einer ersten Ausführungsform, die durch eine erste Zündkammerausgestaltung (in Figur 1B dargestellt) und eine erste Muldenform eines Kolbens in einem Zylinder ausgebildet wird;
- Figur 1B: einen Schnitt durch den ersten Hauptbrennraum im Bereich der Zündkammer gemäß Figur 1A, wobei die Zündkammer in Figur 1A aus Übersichtlichkeitsgründen nicht dargestellt ist;
- Figur 1C: eine Prinzipdarstellung des ersten Hauptbrennraumes gemäß den Figuren 1A und 1B;
- Figur 1D: eine perspektivische Prinzipdarstellung der Zündkammer gemäß der ersten Ausführungsform;
- Figur 1E: eine vergrößerte perspektivische Darstellung eines Schusskanalbereiches der Zündkammer gemäß der ersten Ausführungsform;
- Figur 1F: eine schematische Draufsicht auf den Schusskanalbereich der Zündkammer gemäß der ersten Ausführungsform;
- Figur 2A: eine perspektivische Darstellung eines zweiten Hauptbrennraums einer Verbrennungskraftmaschine in einer zweiten Ausführungsform, die durch eine zweite Zündkammerausgestaltung (in Figur 2B dargestellt) und eine zweite Muldenform eines Kolbens in einem Zylinder ausgebildet wird;
- Figur 2B: einen Schnitt durch den zweiten Hauptbrennraum im Bereich der Zündkammer gemäß Figur 2A, wobei die Zündkammer in Figur 2A aus Übersichtlichkeitsgründen nicht dargestellt ist;
- Figur 2C: eine Prinzipdarstellung des zweiten Hauptbrennraumes gemäß den Figuren 2A und 2B;
- Figur 2D: eine perspektivische Prinzipdarstellung der Zündkammer gemäß der zweiten Ausführungsform;
- Figur 2E: eine vergrößerte perspektivische Darstellung eines Schusskanalbereiches der Zündkammer gemäß der zweiten Ausführungsform;
- Figur 2F: eine schematische Draufsicht auf den Schusskanalbereich der Zündkammer gemäß der zweiten Ausführungsform;
- Figur 3A: einen Schnitt 2-2 gemäß Figur 3B durch die Zündkammer im zentralen Bereich der Zündkammer zur Verdeutlichung der Anordnung der Schusskanäle im zentralen Bereich gemäß der zweiten Ausführungsform;
- Figur 3B: eine schematische Draufsicht auf den Schusskanalbereich der Zündkammer mit primären und zentralen Schusskanalbohrungen mit einem Schnitt 1-1 im primären Bereich der Zündkammer (gemäß Figur 3C) und einem Schnitt 2-2 im zentralen Bereich der Zündkammer (Figur 3A);
- Figur 3C: einen Schnitt 1-1 gemäß Figur 3B durch die Zündkammer im primären Bereich der Zündkammer zur Verdeutlichung der Anordnung der Schusskanäle im primären Bereich gemäß der ersten und zweiten Ausführungsform.

Durch Versuche wurde der Einfluss von verschiedenen Zündkammerausgestaltungen Z1, Z2 und verschiedenen Kolbenmuldenausführungen KM eines beweglichen Kolbens K auf den Verbrennungsprozess eines gasförmigen Kraftstoffs untersucht und festgestellt.

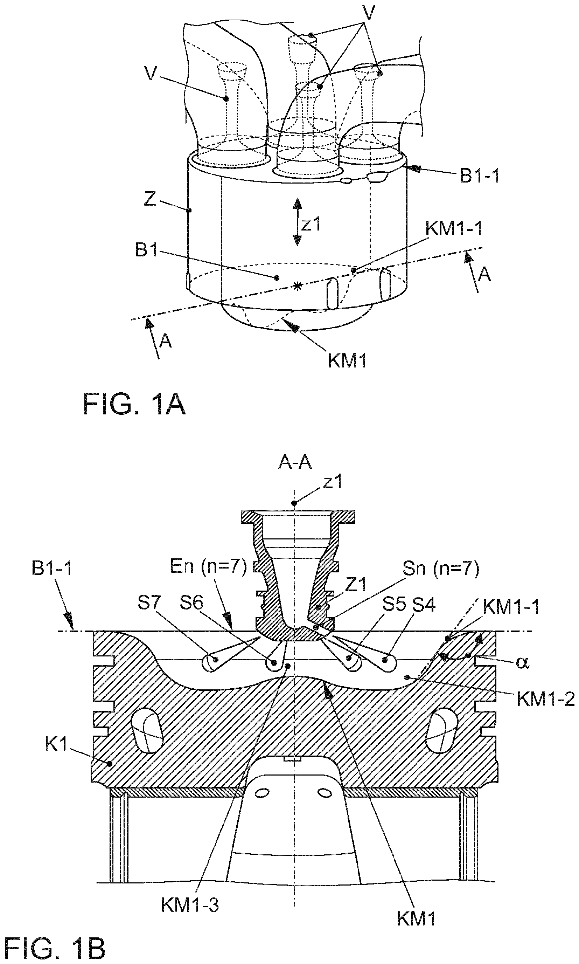

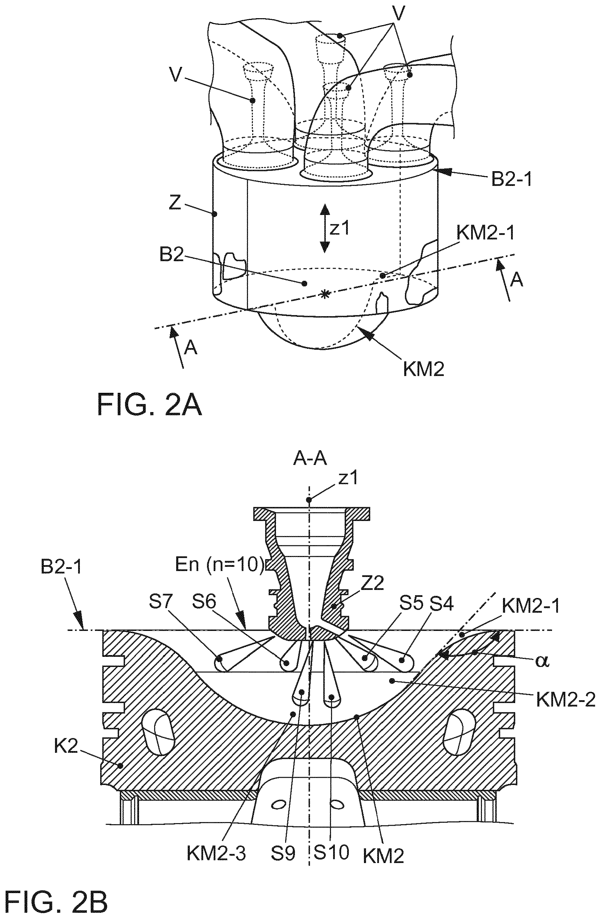

Es wurde herausgefunden, dass die spezifische Abstimmung der Geometrien der beiden einen Hauptbrennraum B1, B2 (vergleiche Figuren 1A und 2A) einer Verbrennungskraftmaschine bildenden Komponenten Z1, Z2 und KM1, KM2 die Verbrennungsverhältnisse wesentlich beeinflussen und insbesondere wesentliche Hebel zur Verbesserung des Verbrennungswirkungsgrades darstellen.

Gegenstand der Erfindung sind zwei prinzipielle Ausführungsformen mit unterschiedlichen Ausführungsvarianten, die sich zur Lösung der Aufgabe als besonders geeignet herausgestellt haben, wobei jeweils eine spezifisch ausgebildete Zündkammer Z1, Z2 mit einer spezifisch ausgestalteten Kolbenmulde KM1, KM2 eines Kolbens K kombiniert ist, wie nachfolgend detailliert erläutert ist.

### Generelle Vorgehensweise beider Ausführungsformen:

Es ist vorgesehen, dass eine Verbrennungskraftmaschine wenigstens einen in einem Zylinder Z ausgebildeten Hauptbrennraum B1, B2 oberhalb eines beweglichen Kolbens K; K1, K2 umfasst, der in dem Zylinder Z angeordnet ist, wobei der Hauptbrennraum B1, B2 aus einem Zündkammerraum einer Zündkammer Z1, Z2, die mit einem Brennstoffzufuhrsystem verbunden ist, mit einer Zündkammerladung gasförmigen Kraftstoffs versorgt wird, wobei dem wenigstens einen Hauptbrennraum B1, B2 zudem eine Hauptbrennraumladung gasförmigen Kraftstoffs zugeführt wird, wobei der Zündkammer Z1, Z2 eine Zündquelle (nicht näher dargestellt) zugeordnet ist, die den gasförmigen Brennstoff in dem Zündkammerraum der Zündkammer Z1, Z2 zu einem vorgebbaren Zeitpunkt zündet, wodurch gezündete reaktive Gasstrahlen En in den Hauptbrennraum B1, B2 schießen und im Hauptbrennraum B1, B2 unter Zündung der Hauptbrennraumladung gemeinsam mit der Zündkammerladung verbrennen, wonach das Abgas aus dem mindestens einen Hauptbrennraum B1, B2 abgeführt wird, wobei die Zündkammer Z1, Z2 Schusskanäle Sn zur gerichteten Einbringung von gezündeten reaktiven Gasstrahlen En in den Hauptbrennraum B1, B2 aufweist, der von einem Hauptbrennraumdach B1-1, B2-1 des Zylinders Z und einer in dem beweglichen Kolben K; K1, K2 ausgebildeten Kolbenmulde KM1, KM2 begrenzt ist.

Erfindungsgemäß sind mehrere reaktive Gasstrahlen En bei einer vorgebbaren Position (zOT) des beweglichen Kolbens im Zylinder Z auf einen primären Zündbereich KM1-2, KM2-2 der Kolbenmulde KM1, KM2 des Kolbens K; K1, K2 gerichtet, der zwischen einem zentralen Bereich KM1-3, KM2-3 und einem im Randbereich der Kolbenmulde liegenden Quetschkantenbereich KM1-1, KM2-1 einer geometrisch spezifisch ausgebildeten Kolbenmulde KM1, KM2 liegt.

Als zentraler Bereich KM1-3, KM2-3 wird der Bereich nahe einer Mittelachse z1 der Kolbenmulde KM1, KM2 des beweglichen Kolbens K; K1, K2 angesehen.

Als primärer Zündbereich KM1-2, KM2-2 wird das Volumen in dem Hauptbrennraum B1, B2 angesehen, der beim Einschießen der reaktiven Gasstrahlen En in den Hauptbrennraum B1, B2 von den reaktiven Gasstrahlen En erfasst wird.

Als sekundärer Bereich wird das Volumen des Hauptbrennraums B1, B2 angesehen, das sich an das durch den primären Zündbereich KM1-2, KM2-2 erfasste Volumen anschließt, wobei sich im Grenzbereich zwischen primärem Zündbereich KM1-2, KM2-2 und sekundärem Bereich eine Flammenfront ausbildet, die sich von dem Grenzbereich in Richtung der Kolbenmulde KM1, KM2 des beweglichen Kolbens K; K1, K2 ausbreitet.

Die Hauptbrennraumladung wird durch äußere oder innere Gemischbildung in den Hauptbrennraum B1, B2 eingebracht.

Bei der äußeren Gemischbildung wird ein gasförmiges Kraftstoff/Luft-Gemisch außerhalb des Hauptbrennraums B1, B2 erzeugt und über mindestens ein Einlassventil V in den Hauptbrennraum B1, B2 eingebracht.

Bei der inneren Gemischbildung wird ein gasförmiges Kraftstoff/Luft-Gemisch innerhalb des Hauptbrennraums B1, B2 erzeugt und über mindestens ein Einlassventil V wird Verbrennungsluft und über ein nicht näher dargestelltes Einblaselement, insbesondere ein Einblasventil, wird gasförmiger Kraftstoff in den Hauptbrennraum B1, B2 eingebracht.

Als Ladung wird die Masse des Kraftstoff/Luft-Gemisches im Zündkammerraum der Zündkammer Z1, Z2 und im Hauptbrennraum B1, B2 definiert.

Vorgesehen ist, dass im Zündkammerraum und im Hauptbrennraum B1, B2 bevorzugt der gleiche gasförmige Brennstoff verwendet wird. Eine Verwendung von unterschiedlichen gasförmigen Brennstoffen wird nicht ausgeschlossen.

Die Zündkammerladung in der Zündkammer Z1, Z2 ist dabei mindestens so fett, wie die Hauptbrennraumladung im Brennraum B1, B2, wobei in einer Ausgestaltung insbesondere vorgesehen ist, dass die Zündkammerladung ein fetteres Kraftstoff/Luft-Gemisch-Verhältnis (sogenannte aktive Zündkammer) von beispielsweise λ = 1 und die Hauptbrennraumladung ein mageres Kraftstoff/Luft-Gemisch-Verhältnis von beispielsweise von λ = 1,5 aufweist, sodass unter Berücksichtigung der eingebrachten Mengen im Hauptbrennraum B1, B2 insgesamt ein mageres Erdgasbrennverfahren mit einem Kraftstoff/Luft-Gemisch-Verhältnis λ > 1 realisierbar ist.

In einer anderen Ausgestaltung ist vorgesehen, dass die Zündkammerladung ein Kraftstoff/- Luft-Gemisch-Verhältnis (sogenannte passive Zündkammer), mit einem Lambda λ aufweist, welches dem Kraftstoff/Luft-Gemisch-Verhältnis im Hauptbrennraum entspricht, sodass das Kraftstoff/Luft-Gemisch in der Zündkammer Z1, Z2 λ_{Zündkammer} = λ_{Hauptbrennraum} des Kraftstoff/Luft-Gemischs in dem Hauptbrennraum B1, B2 ist.

In diesem Fall ist keine zusätzliche Kraftstoffeinbringung in die Zündkammer vorgesehen, das heißt der Kraftstoff in der Zündkammer wird aus dem Hauptbrennraum durch Überschieben des Kraftstoff/Luft-Gemischs während des Verdichtungstaktes in die Zündkammer eingebracht, sodass ebenfalls ein mageres Erdgasbrennverfahren mit einem Kraftstoff-Luftgemisch-Verhältnis realisierbar ist, welches sich aus dem gewählten λ_{Hauptbrennraum} ergibt. Dadurch kann der Bauaufwand reduziert werden, das ein separates Einblasventil für die Zündkammer nicht mehr benötigt und die Motorsteuerung vereinfacht wird. Wird λ_{Zündkammer} = λ_{Hauptbrennraum} = 1 gewählt, kann die Abgasnachbehandlung in üblicher Weise durch einen Drei-Wege-Katalysator zusammen mit einer Lambda-Regelung erfüllt werden.

Bei der nachfolgenden Beschreibung wird nur beispielsweise von einer äußeren Gemischbildung ausgegangen:

In einem Ansaugtakt (vergleiche vorab Figur en 1A und 2A) wird ein Einlassventil V geöffnet, und dem Hauptbrennraum B1, B2 wird eine Hauptbrennraumladung vorzugsweise eines mageren Kraftstoff/Luft-Gemisches durch einen Einlasskanal zugeführt.

Das Einlassventil V wird entweder vor Beginn des Kompressionstaktes, zu Beginn des Kompressionstaktes oder während des Kompressionstaktes geschlossen.

Im Wesentlichen gleichzeitig wird dem Zündkammerraum eine Zündkammerladung zugeführt, die gegenüber der Hauptbrennraumladung vergleichsweise als fetteres Kraftstoff/Luft-Gemisch bereitgestellt wird. Das Anfetten des Zündkammerraumes erfolgt durch eine Direkteinblasung von gasförmigem Kraftstoff in den Zündkammerraum.

Während der Verlagerung des Kolbens K; K1, K2 in Richtung seines oberen Totpunkts wird ein geringer Teil der Hauptbrennraumladung aus dem Hauptbrennraum B1, B2 über die Schusskanalachsen Sn in den als Zündkammer Z1, Z2 ausgebildeten Zündkammerraum gedrängt, sodass hier ein vergleichsweise fettes, brennbares, insbesondere leicht zündbares Kraftstoff/Luft-Gemisch λ > 1 im Bereich λ = 1, 3 bis 1,5 gebildet wird.

Dieses Kraftstoff/Luft-Gemisch wird anschließend zu einem vorbestimmten Zündzeitpunkt mittels der nicht näher dargestellten Zündeinrichtung, insbesondere einer Zündkerze, gezündet, was eine Drucküberhöhung durch Zündung des Kraftstoff/Luft-Gemischs in dem Zündkammerraum zur Folge hat.

Daraufhin schießen heiße Flammenkeulen (nachfolgend weiter als reaktive Gasstrahlen En bezeichnet) durch die Schusskanalachsen Sn in den Hauptbrennraum B1, B2 und entzünden das dort angeordnete, magerere Kraftstoff/Luft-Gemisch. Dabei wird der Kolben K; K1, K2 in seinem Arbeitstakt wieder nach unten verlagert.

Anschließend wird das Abgas bei einer erneuten Aufwärtsbewegung des Kolbens K; K1, K2 in für sich genommen bekannter Weise durch ein Auslassventil V in einen Abgaskanal ausgeschoben.

Der Zündkammerraum wird während des Kompressionstaktes mit Kraftstoff/Luft-Gemisch aus dem Hauptbrennraum gefüllt und zusätzlich wird in die Zündkammer reiner Kraftstoff eingeblasen (aktive Zündkammer), sodass zum Zündzeitpunkt im Zündkammerraum ein fettes Kraftstoff/Luft-Gemisch (Zündkammerladung) als im Hauptbrennraum (Hauptbrennraumladung) vorliegt.

Erst wenn der Kolben K; K1, K2 wieder in Richtung seines oberen Totpunkts fährt, wird das magere Kraftstoff/Luft-Gemisch aus der Hauptkammer B1, B2 auch in die Vorkammer Z1, Z2 gedrückt, wo dann ein fetteres und leicht zündbares Kraftstoff/Luft-Gemisch gebildet wird.

Bei der Erfindung werden ausgehend von der vorhergehenden Vorgehensweise in eine zweite Ausführungsform die Zündkammerausgestaltungen Z1, Z2 mit Kolbenmulden KM1, KM2 zur geometrischen Ausgestaltung des Hauptbrennraumes B1, B2 derart kombiniert, dass die gestellte Aufgabe der Erfindung gelöst wird, wie nachfolgend anhand von die zweite Ausführungsform beschrieben wird.

Erste Ausführungsform (nicht Teil der Erfindung): Zündkammerausgestaltung Z1: Zündkammerdom Z1-1 mit ausschließlich randseitigen Schusskanälen Sn zur Erzeugung der reaktiven Gasstrahlen En. Kolbenmulde KM1: Abgerundete Omega-Form.

Bei der ersten Ausführungsform, die nachfolgend erläutert wird, ist die erste Zündkammerausgestaltung Z1 mit einer ersten Kolbenmulde KM1 kombiniert, wie nachfolgend detailliert erläutert wird.

Die Figur 1A zeigt eine perspektivische Darstellung eines ersten Hauptbrennraums B1 einer Verbrennungskraftmaschine in einer ersten Ausführungsform, die durch die erste Zündkammerausgestaltung Z1 und die erste Muldenform KM1 eines Kolbens K; K1 in einem Zylinder Z in Kombination ausgebildet wird.

In Figur 1A ist die Muldenform KM1, jedoch die Zündkammer Z1 aus Übersichtlichkeitsgründen nicht dargestellt. Die Zündkammer Z1 ist gemäß Figur 1B rotationssymmetrisch auf einer gemeinsamen Längsachse z1 der Zündkammer Z1 und des Kolbens K; K1 zwischen den in Figur 1A gezeigten Ein- und Auslassventilen V angeordnet.

Figur 1B zeigt einen Schnitt durch den Hauptbrennraum B1 im Bereich der Zündkammer Z1 gemäß Figur 1A, wobei sich der bewegliche Kolben K1 in Figur 1B im oberen Totpunkt befindet.

In der Zusammenschau der Figuren 1A und 1B wird deutlich, dass die Kolbenmulde KM1 mit abgerundeter Omega-Form eine abgerundete Quetschkante KM1-1 mit einem stumpfen Quetschkantenwinkel α (vergleiche Figur 1B) aufweist.

Der stumpfe Quetschkantenwinkel α wird zwischen einer Geraden entlang des Hauptbrennraumdachs B1-1 und einer Tangente entlang eines Randbereiches der Kolbenmulde KM1 (vergleiche Figur 1B) auf der Kolbenseite des Kolbens K; K2 gebildet.

Es ist ferner vorgesehen, dass die Kolbenmulde KM1 mit der abgerundeten Omega-Form in den Übergängen von der Quetschkante KM1-1 zu zuvor definiertem primären Zündbereich KM1-2 und von dem primären Zündbereich KM1-2 zu einem zentralen Bereich KM1-3 im Bereich der Längsachse z1 große Radien (vergleiche vorab Figur 1C) ausgebildet sind.

Insbesondere ist vorgesehen, dass der Übergang von dem Bereich der Quetschkante KM1-1 zu dem primären Zündbereich KM1-2 abgerundet ist, wodurch sich in der abgerundeten Omega-Form der Kolbenmulde KM1 eine den Abbrand unterstützende Geometrie der Kolbenmulde KM1 ergibt.

Dadurch wird in vorteilhafter Weise das Verhältnis von Volumen der ersten Brennkammer B1 zu Oberfläche der Kolbenmulde KM1 maximiert und es werden zudem durch die abgerundeten Omega-Formen Gebiete mit unvollständigem Ausbrand verhindert.

Bei dieser Lösung ist in vorteilhafter Weise eine geringere Kompressionshöhe (Abstand Kolbenbolzen bis Kolbenoberseite) ausgebildet, sodass ein längeres Pleuel verwendbar ist, wodurch weniger Reibung zwischen dem Kolben K; K1 und der Wandung der Zylinderbohrung entsteht.

Die Figur 1C zeigt eine Prinzipdarstellung des ersten Hauptbrennraumes B1 gemäß den Figuren 1A und 1B, wobei die Figur 1D in einer Zusammenschau mit der Figur 1C eine perspektivische Prinzipdarstellung der Zündkammer Z1 gemäß der ersten Ausführungsform mit den Schusskanälen Sn zeigt.

Die Figur 1E verdeutlicht in einer vergrößerten perspektivischen Darstellung den Düsenbereich der Zündkammer Z1 gemäß der ersten Ausführungsform, in der bevorzugt sieben Schusskanäle Sn (n=7) ausgebildet sind, sodass im Betrieb sieben reaktive Gasstrahlen En (n=7), sogenannte Flammenkeulen, ausgebildet werden.

Die sieben Schusskanäle Sn sind gleichmäßig auf dem Umfang des rotationssymmetrischen Zündkammerdoms Z1-1 der Zündkammer Z1 verteilt angeordnet.

Die Muldengeometrie der Kolbenmulde KM1 ist in vorteilhafter Weise an die Raumerfassung durch die Flammkeulen der reaktiven Gasstrahlen En, in dieser Ausführungsform n = 7, angepasst.

In vorteilhafter Weise wird das Volumen der ersten Brennkammer B1 durch das Muldenvolumen in dem primären Zündbereich KM1-2 zwischen der Quetschkante KM1-1 und dem zentralen Bereich KM1-3 konzentriert und direkt im zentralen Bereich KM1-3 in axialer Richtung z1 unterhalb der Zündkammer Z1 minimiert.

Vorgesehen ist ferner, dass die Schusskanalachsen SAn (n = 7) der Schusskanäle Sn (n=7) in Bezug auf die Längsachse z1 (erste Ausführungsvariante) radial (Höhenwinkel γn) oder (zweite Ausführungsvariante) radial und zusätzlich schräg tangential ausgerichtet sind, wobei in den Figuren 1D und 1F die zweite Ausführungsvariante dargestellt ist.

Ausrichtung der Schusskanalachsen SAn (n = 7) gemäß einer erstens Ausführungsvariante der ersten Ausführungsform:
In dieser ersten Ausführungsvariante sind die Schusskanalachsen SAn (n = 7) der Schusskanäle Sn gegenüber der Ebene des Hauptbrennraumdaches B1-1 radial abgehend um einen vorgebbaren Höhenwinkel γn (vergleiche Figur 1C) ausgerichtet, wobei der jeweilige Höhenwinkel γn zwischen der Längsachse z1 der Kolbenlaufbahn und den Schusskanalachsen SAn (n = 7) der Schusskanäle Sn definiert ist.

Für jede der Schusskanalachsen SAn (n = 7) der Schusskanäle Sn (n=7) wird ein bevorzugter Bereich für den Höhenwinkel γn vorgeschlagen, der bewirkt, dass die reaktiven Gasstrahlen En (n=7) im Wesentlichen in den primären Zündbereich KM1-2 der omegaförmigen Kolbenmulde KM1 zwischen dem zentralen Bereich KM1-3 und der Quetschkante KM1-1 einschießen (vergleiche auch Figur 1B), sodass die Zündkammerladung die Hauptbrennraumladung in vorteilhafter Weise in einer auf die Omega-Kolbenmulde KM1 abgestimmten Raumerfassung im primären Zündbereich KM1-2 zündet.

Der bevorzugte Bereich für die Winkel γn (n=7) beträgt zwischen γn = 30° und γn = 80°, wobei sich ein Winkel γn = 65° als besonders bevorzugt herausgestellt hat, wobei für alle Schusskanalachsen SAn (n = 7) der Schusskanäle Sn (n=7) stets die gleichen Winkel γn aus dem bevorzugten Bereich gewählt werden oder der bevorzugte Winkel γn = 65° für alle Winkel γn (n=7) gewählt wird.

Ausrichtung der Schusskanalachsen gemäß einer zweiten Ausführungsvariante der ersten Ausführungsform:
Die Schusskanalachsen SAn (n = 7) sind zunächst gemäß der ersten Ausführungsvariante in einem bevorzugten vorgebbaren Höhenwinkel γn angeordnet, und ausgehend von der Längsachse z1 der Zündkammer Z1 und des Kolbens K; K1 in Umfangsrichtung zusätzlich um einen vorgebbaren Kippwinkel (n=7) gekippt angeordnet, wie am besten durch eine Zusammenschau der Figuren 1E und 1F am Beispiel der Schusskanalachse SA2 des Schusskanales S2 deutlich wird.

Die Schusskanalachse SA2 des Schusskanales S2 ist zunächst gegenüber dem Hauptbrennraumdach B1-1 um den Höhenwinkel γ2 gemäß der ersten Ausführungsvariante der ersten Ausführungsform angeordnet, und weiterhin um den Kippwinkel in Umfangsrichtung (um z1) verlagert, wodurch die reaktive Gasstrahlen En im Wesentlichen in den Bereich zwischen dem zentralen Bereich KM1-3 und der Quetschkante KM1-1 in den vorgesehenen primären Zündbereich KM1-2 (vergleiche auch Figur 1B) gerichtet sind, und dabei noch in vorteilhafter Weise in Umfangsrichtung (um z1) der Kolbenmulde KM1 im primären Zündbereich KM1-2 verdrallt werden, wodurch sich der Ausbrand noch weiter verbessert. Die Zündkammerladung zündet somit in vorteilhafter Weise die Hauptbrennraumladung in einer abgestimmten Raumerfassung im primären Zündbereich KM1-2, wobei sich die erzeugte Flammenfront bei der zweiten Ausführungsvariante verdrallt aus dem primären Zündbereich KM1-2 in den sekundären Bereich ausbreitet und damit den Ausbrand im Hauptbrennraum B1 wesentlich verbessert.

Der den Drall erzeugende Kippwinkelbereich wird festgelegt durch den kleinsten Durchmesser des Zündkammerkreises ZD2 größer/gleich (>/=), der dem Durchmesser der Austrittspunkte der Schusskanalbohrungen aus der Zündkammer ZK2 im zentralen Zündbereich der Zündkammer Z2 entspricht, wobei die Schusskanalbohrungen verschneidungsfrei angeordnet sind.

Ferner wird festgelegt, dass der größte Durchmesser des Zündkammerkreises ZD2 im zentralen Bereich kleiner/gleich (</=) dem Durchmesser ist, auf dem die Austrittspunkte der Schusskanalbohrungen des primären Zündbereichs auf der Innenseite die Kammerwand der ersten oder zweiten Zündkammer ZK1, ZK2 durchstoßen, wobei von diesem Durchmesser der Bohrungsdurchmesser der Schusskanalbohrungen des zentralen Zündbereichs abzuziehen ist. Die Austrittspunkte der Schusskanalbohrungen im zentralen Bereich legen sich in Abhängigkeit des Durchmessers des zentralen Zündkammerkreises ZD2 tangential an dem ausgewählten Durchmesser des zentralen Tangentialkreises TD2 an.

Erfindungsgemäß ist vorgesehen, dass der Durchmesser des zentralen Tangential-Kreises TD2 des zentralen Zündbereichs ¾ bis ¼ des Durchmessers des Zündkammerkreises ZD2 des zentralen Zündbereichs beträgt.

Dabei bilden die Schusskanalachsen SAn (n = 7) bei einem Kippwinkel > 0° Tangenten an einem gedachten vorgebbaren sogenannten (vergleiche Figur 1F) primären Tangential-Kreis TD1.

Der gedachte vorgebbare primäre Tangential-Kreis TD1, an dem die auf einem primären Zündkammerkreis ZD1 gleichmäßig verteilten Schusskanalachsen SAn (n = 7) bei einem Kippwinkel > 0° tangentenartig anliegen, ist kleiner als der Zündkammerkreis ZD, der durch die Austrittspunkte der Schusskanalbohrungen in der Zündkammer Z1 definiert ist.

Es ist vorgesehen, dass der Durchmesser des primären Tangential-Kreises TD1 ¾ bis ¼ des Durchmessers des primären Zündkammerkreises ZD1 beträgt.

Aus Figur 1E in Zusammenschau mit Figur 1B kann noch aus den Figuren entnommen werden, dass der Zündkammerdom Z1-1 wie ein abgerundeter Kegelstumpf ausgebildet ist, dessen Deckfläche zu der Kolbenmulde KM1 gerichtet ist.

In der Mantelfläche des Kegelstumpfes sind die Öffnungen für die Schusskanäle Sn (n=7) sozusagen randseitig (im Rand Z1-11) des Zündkammerdoms Z1-1 angeordnet.

Durch diese Ausgestaltung lassen sich die reaktiven Gasstrahlen E1 bis E7 in vorteilhafter Weise (je nach Ausführungsvariante der Ausrichtung der Schusskanalachsen) in die gewünschte Richtung fokussieren, sodass die erzeugten Flammenkeulen der reaktiven Gasstrahlen En (n=7) in ihrer endseitigen keulenartigen Ausbreitung (vergleiche Figur 1B) in genauerer Orientierung auf den gewünschten Bereich des primären Zündbereichs KM1-2 treffen und unter gutem Ausbrand des gasförmigen Kraftstoffs nach entsprechender Zündung der Hauptbrennraumladung die gewünschte Wirkung auf den Kolben K; K1 entfalten.

Die Figur 1F verdeutlicht in einer schematischen Ansicht von oben auf den Düsenbereich der Zündkammer Z1 gemäß der ersten Ausführungsform, wie die sieben Schusskanäle Sn (n=7) ausschließlich randseitig im Rand Z1-11 des Zündkammerdomes Z1-1 der Zündkammer Z1 zusätzlich zu dem Höhenwinkel γn tangentenartig an dem primären Tangentialkreis TD1 in dem vorgebbaren Kippwinkelbereich angeordnet sind.

Die Kombination der Zündkammerausgestaltung Z1 mit dem Zündkammerdom Z1-1 mit ausschließlich randseitigen Schusskanälen Sn (n=7) zur Erzeugung der reaktiven Gasstrahlen En (n=7) mit der beschriebenen Kolbenmulde KM1 mit abgerundeter Omega-Form führt, wie die Versuche gezeigt haben, zu einer Verbrennung von gasförmigem Kraftstoff mit geringen Wandwärmeverlusten und einem sehr guten Ausbrand, wodurch gegenüber herkömmlichen Lösungen mit scharfer Quetschkante in einem durch eine Zündkammer gezündeten mageren Erdgasbrennverfahren der verzögerte Ausbrand in der Quetschfläche und in der Muldenmitte verhindert wird.

### Zweite Ausführungsform:

Zündkammerausgestaltung Z2: Zündkammerdom Z2-1 mit randseitigen Schusskanälen und zentralen Schusskanälen Sn zur Erzeugung der reaktiven Gasstrahlen En.

Kolbenmulde KM2: Hemisphärische Form.

Bei der zweiten Ausführungsform, die nachfolgend erläutert wird, ist die zweite Zündkammerausgestaltung Z2 mit einer Kolbenmulde KM2, die als zweite Kolbenmulde bezeichnet wird, kombiniert, wie nachfolgend detailliert erläutert wird.

Die Figur 2A zeigt eine perspektivische Darstellung eines zweiten Hauptbrennraums B2 einer Verbrennungskraftmaschine in einer zweiten Ausführungsform, die durch die zweite Zündkammerausgestaltung Z2 und die zweite Muldenform KM2 eines Kolbens K; K2 in einem Zylinder Z in Kombination ausgebildet wird.

In Figur 2A ist die Muldenform KM2, jedoch die Zündkammer Z2 aus Übersichtlichkeitsgründen nicht dargestellt. Die Zündkammer Z2 ist gemäß Figur 2B rotationssymmetrisch auf einer gemeinsamen Längsachse z1 der Zündkammer Z2 und des Kolbens K; K2 zwischen den in Figur 2A gezeigten Ein- und Auslassventilen V angeordnet.

Figur 2B zeigt einen Schnitt durch den Hauptbrennraum B2 im Bereich der Zündkammer Z2 gemäß Figur 2A, wobei sich der Kolben K2 in Figur 2B im oberen Totpunkt befindet.

In der Zusammenschau der Figuren 2A und 2B wird deutlich, dass die Kolbenmulde KM2 mit ihrer hemisphärischen Form eine abgerundete Quetschkante KM2-1 mit einem stumpfen Quetschkantenwinkel α (vergleiche Figur 2B) aufweist.

Der stumpfe Quetschkantenwinkel α wird analog zur ersten Ausführungsform zwischen einer Geraden entlang des Hauptbrennraumdachs B2-1 und einer Tangente entlang eines Randbereiches der Kolbenmulde KM2 (vergleiche Figur 2B) auf der Kolbenseite des Kolbens K; K2 gebildet.

Erfindungsgemäß ist ferner vorgesehen, dass die Kolbenmulde KM2 mit der hemisphärischen Form in den Übergängen von der Quetschkante KM2-1 zu primärem Zündbereich KM2-2 und von dem primären Zündbereich KM2-2 zu dem zentralen Bereich KM2-3 im Bereich der Längsachse z1 große Radien (vergleiche vorab Figur 2C) ausgebildet sind.

Insbesondere ist vorgesehen, dass der Übergang von dem Bereich der Quetschkante KM2-1 zu dem primärer Zündbereich KM2-2 abgerundet ist, wodurch sich in der abgerundeten hemisphärischen Form der Kolbenmulde KM2 eine den Abbrand unterstützende Geometrie der Kolbenmulde KM2 ergibt.

Bei dieser Kolbenmulde KM2 werden in vorteilhafter Weise bei einem kleinstmöglichen Oberflächen-Volumenverhältnis die kürzesten mittleren Flammenwege der Flammenkeulen der reaktiven Gasstrahlen En geschaffen.

Sehr kurze mittlere Flammenwege erlauben nach der Zündung der Hauptbrennraumladung durch die Zündkammerladung in vorteilhafter Weise einen schnelleren Durchbrand und einen höheren Gleichraumgrad, was sich positiv auf den Wirkungsgrad der Verbrennung auswirkt.

Die Figur 2C zeigt eine Prinzipdarstellung des zweiten Hauptbrennraumes B2 gemäß den Figuren 2A und 2B, wobei die Figur 2D in einer Zusammenschau mit der Figur 2C eine perspektivische Prinzipdarstellung der Zündkammer Z2 gemäß der zweiten Ausführungsform mit den Schusskanälen Sn zeigt.

Die Figur 2E verdeutlicht, in einer vergrößerten perspektivischen Darstellung des Düsenbereiches Sn der Zündkammer Z2 gemäß der zweiten Ausführungsform, dass bevorzugt zehn Schusskanäle Sn (n = 10) ausgebildet sind, sodass im Betrieb zehn reaktive Gasstrahlen En (n = 10) als sogenannte Flammenkeulen ausgebildet werden.

Dabei sind erfindungsgemäß sieben Schusskanäle Sn (S1 bis S7) gleichmäßig (mit gleichem Winkelabstand) auf dem randseitigen Umfang des rotationssymmetrischen Zündkammerdoms Z2-1 der Zündkammer Z2 verteilt angeordnet.

Drei weitere Schusskanäle Sn (S8 bis S10) sind ebenfalls gleichmäßig (mit gleichem Winkelabstand) auf einem zentralen Umfang des rotationssymmetrischen Zündkammerdoms Z2-1 der Zündkammer Z2 verteilt angeordnet.

Es wird deutlich, dass die Muldengeometrie der Kolbenmulde KM2 mit ihrer hemisphärischen Form an die Raumerfassung durch die Flammenkeulen der reaktive Gasstrahlen En (n=10) angepasst ist.

In vorteilhafter Weise wird das Volumen der zweiten Brennkammer B2 durch das Muldenvolumen in dem primären Zündbereich KM2-2 zwischen der Quetschkante KM2-1 und dem zentralen Bereich KM2-3 für die sieben Flammkeulen der reaktive Gasstrahlen En (E1 bis E7) konzentriert und im zentralen Bereich KM2-3 werden die drei zusätzlichen zentral angeordneten Flammenkeulen der reaktiven Gasstrahlen En (E8 bis E10) näher zur Längsachse z1 in axialer Richtung hin unterhalb der Zündkammer Z2 konzentriert.

Hierdurch besteht ein wesentlicher Unterschied der zweiten Ausführungsform gegenüber der ersten Ausführungsform, bei der im zentralen Bereich KM1-3 in axialer Richtung Z1 unterhalb der Zündkammer Z1 eine Minimierung des Muldenvolumens vorliegt.

Vorgesehen ist analog zur ersten Ausführungsform ferner, dass die Schusskanalachsen SAn (n = 10) der Schusskanäle Sn (n = 10) in Bezug auf die Längsachse z1 (erste Ausführungsvariante) radial (Höhenwinkel γn) oder (zweite Ausführungsvariante) radial und zusätzlich schräg tangential (Höhenwinkel γn in Kombination mit Kippwinkel) ausgerichtet sind, wobei in den Figuren 2D und 2E die zweite Ausführungsvariante dargestellt ist.

Ausrichtung der Schusskanalachsen gemäß einer ersten Ausführungsvariante der zweiten Ausführungsform:
In der ersten Ausführungsvariante sind die Schusskanalachsen SAn (n = 10) gegenüber der Ebene des Hauptbrennraumdaches B2-1 radial abgehend um den vorgebbaren Höhenwinkel γn (vergleiche Figur 2C) ausgerichtet.

Für jede der Schusskanalachsen SAn (n = 7) der Schusskanäle Sn (n = 7) wird ein bevorzugter Bereich für den Höhenwinkel γn vorgeschlagen, der bewirkt, dass die reaktiven Gasstrahlen E1 bis E7 im Wesentlichen in den Bereich zwischen den zentralen Bereich KM2-3 und der Quetschkante KM2-1 in den vorgesehenen primären Zündbereich KM2-2 einschießen (vergleiche auch Figur 2B), sodass die Zündkammerladung die Hauptbrennraumladung in vorteilhafter Weise in einer auf die hemisphärische Kolbenmulde KM2 abgestimmte Raumerfassung im primären Zündbereich KM2-2 zündet.

Der bevorzugte Bereich für die Winkel γn (n=7) beträgt (analog zu der ersten Ausführungsform) zwischen γn = 30° und γn = 80°, wobei sich ein Winkel γn = 65° als besonders bevorzugt heraus gestellt hat, wobei für alle Schusskanalachsen SAn (n = 7) der Schusskanäle Sn (n=7) stets die gleichen Winkel γn aus dem bevorzugten Bereich gewählt werden oder der bevorzugte Winkel γn = 65° für alle Winkel γn (n=7) gewählt wird.

Für jede der zentralen Schusskanalachsen SAn (S8 bis S10) der Schusskanäle Sn (S8 bis S10) wird ebenfalls ein bevorzugter Bereich für den Höhenwinkel γn vorgeschlagen, der bewirkt, dass die reaktiven Gasstrahlen En (E8 bis E10) im Wesentlichen in dem zentralen Bereich KM2-3 (vergleiche Figur 2B) in die hemisphärische Kolbenmulde KM2 einschießen.

Der bevorzugte Höhenwinkelbereich für die Winkel γn (n= 8 bis 10) beträgt zwischen 0° und 30°, wobei sich ein Winkel γn = 10° als besonders bevorzugt herausgestellt hat, wobei für alle Schusskanalachsen SAn (S8 bis S10) der Schusskanäle Sn (S8 bis S10) stets die gleichen Winkel γn aus dem bevorzugten Bereich gewählt werden oder der bevorzugte Winkel yn = 10° für alle Winkel γn (S8 bis S10) gewählt wird.

Ausrichtung der Schusskanalachsen gemäß der zweiten Ausführungsvariante der zweiten Ausführungsform:
Die Schusskanalachsen SAn (S1 bis S10) sind zunächst gemäß der ersten Ausführungsvariante in einem bevorzugten vorgebbaren Höhenwinkel γn angeordnet, und ausgehend von der Längsachse z1 der Zündkammer Z1 und des Kolbens K; K1 in Umfangsrichtung zusätzlich um einen vorgebbaren Kippwinkel gekippt angeordnet, wie am besten durch eine Zusammenschau der Figuren 2E und 2F am Beispiel der Schusskanalachsen SA2, SA10 der Schusskanäle S2, S10 deutlich wird.

Die Schusskanalachsen SA2 und SA10 der beispielhaft erläuterten Schusskanäle S2 und S10 sind zunächst gegenüber dem Hauptbrennraumdach B2-2 um die Winkel γ2, γ10 gemäß der ersten Ausführungsvariante der zweiten Ausführungsform angeordnet, und weiterhin um den Kippwinkel in Umfangsrichtung (um z1) verlagert, wodurch die sieben reaktiven Gasstrahlen En (E1 bis E7) im Wesentlichen in den Bereich zwischen dem zentralen Bereich KM2-3 und der Quetschkante KM2-1 in den vorgesehenen primären Zündbereich KM2-2 (vergleiche auch Figur 2B) in die Kolbenmulde KM2 einschießen und dabei durch die Kippung noch in vorteilhafter Weise in Umfangsrichtung (um z1) der Kolbenmulde KM2 im primären Zündbereich KM2-2 verdrallt werden, wodurch sich der Ausbrand noch weiter verbessert.

Da auch die zentralen reaktiven Gasstrahlen En (E7 bis E10) um den Kippwinkel in Umfangsrichtung (um z1) verlagert sind, schießen diese reaktiven Gasstrahlen En (E8 bis E10), wie erläutert, in den zentralen Bereich KM2-3 in die hemisphärische Kolbenmulde KM2 ein und werden dabei in vorteilhafter Weise analog zu den reaktiven Gasstrahlen En (E1 bis E7) ebenfalls verdrallt, wodurch auch der Ausbrand auch im zentralen Bereich KM2-3 verbessert wird. Die Zündkammerladung zündet somit in vorteilhafter Weise die Hauptbrennraumladung in einer abgestimmten Raumerfassung im primären Zündbereich KM2-2 und im zentralen Bereich KM2-3, der somit dem primären Zündbereich KM2-2 zugeordnet ist, wobei sich die erzeugte Flammenfront bei der zweiten Ausführungsvariante verdrallt aus dem primären Zündbereich KM2-2 und dem zentralen (Zünd)-Bereich KM2-3 in den sekundären Bereich ausbreitet und damit den Ausbrand im Hauptbrennraum B2 wesentlich verbessert.

Bei dieser zweiten Ausführungsform sind somit zwei Zündbereiche, nämlich der primäre Zündbereich KM2-2 und der zentrale (Zünd)-Bereich KM2-3 der Zündkammerladung zwischen der Quetschkante KM2-1 und Längsachse z1 der Zündkammer Z2 vorgesehen, welche die Hauptbrennraumladung in der hemisphärischen Kolbenmulde KM2 zünden.

Dabei bilden die Schusskanalachsen SAn (n = 10) bei einem Kippwinkel > 0° Tangenten an gedachten vorgebbaren sogenannten (vergleiche Figur 1F) zentralen Tangential-Kreisen TD2.

Die gedachten vorgebbaren zentralen und primären Tangential-Kreise TD2, TD1, an denen die auf den zentralen und primären Zündkammerkreisen ZD2, ZD1 gleichmäßig verteilten Schusskanalachsen SAn (n = 10) bei einem Kippwinkel > 0° tangentenartig anliegen, sind erfindungsgemäß kleiner als die zentralen und primären Zündkammerkreise ZD2, ZD1 der Austrittspunkte der Schusskanalbohrungen der Schusskanäle S1 bis S7 beziehungsweise S8 bis S10 der Zündkammer Z2.

Erfindungsgemäß ist vorgesehen, dass der Durchmesser des primären Tangential-Kreises TD1 ¾ bis ¼ des Durchmessers des Zündkammerkreises ZD1 (vergleiche Figur 2F) bezüglich der Austrittspunkte der Schusskanalbohrungen der Schusskanäle S1 bis S7 beträgt.

Erfindungsgemäß ist weiter vorgesehen, dass der Durchmesser des zentralen Tangential-Kreises TD2 ¾ bis ¼ des Durchmessers des Zündkammerkreises ZD2 (vergleiche Figur 2F) bezüglich der Austrittspunkte der Schusskanalbohrungen der Schusskanäle S8 bis S10 beträgt.

In einer dritten Ausführungsvariante der zweiten Ausführungsform ist vorgesehen, dass für die Schusskanalachsen SA1 bis SA7 der Schusskanäle S1 bis S7 und die Schusskanalachsen SA8 bis SA10 der Schusskanalachsen S8 bis S10 unterschiedliche Kippwinkel gewählt werden.

Dadurch ist es in vorteilhafter Weise möglich, unabhängig von der bereits unterschiedlichen Anordnung der Schusskanäle im Randbereich und im zentralen Bereich des Zündkammerdoms Z1-1 zusätzlich durch unterschiedliche Kippwinkel im primären Zündbereich KM2-2 und im zentralen (Zünd)-Bereich KM2-3 unterschiedliche Drallwirkungen zu erzielen.

Dabei kann beispielsweise vorgesehen sein, dass die Drallrichtung gleichgerichtet oder entgegengesetzt gerichtet ist. Mit anderen Worten kann über die Ausrichtung der Schusskanalachsen SA1 bis SA7 der Schusskanäle S1 bis S7 im Rand Z2-11 des Zündkammerdomes Z2-1 und der Schusskanalachsen SA7 bis SA10 der Schusskanäle S7 bis S10 im zentralen Bereich KM2-3 des Zündkammerdomes Z2-1 die Drallbewegung in dem Hauptbrennraum B2 beeinflusst werden.

Aus Figur 2E in Zusammenschau mit Figur 2B kann erfindungsgemäß noch aus den Figuren entnommen werden, dass der Zündkammerdom Z2-1 der zweiten Ausführungsform ebenfalls wie ein abgerundeter Kegelstumpf ausgebildet ist, dessen Deckfläche zu der Kolbenmulde KM2 gerichtet ist.

Dabei sind die Schusskanalachsen der Schusskanäle Sn (n = 7) in der Mantelfläche des Kegelstumpfes als Öffnungen für die Schusskanäle Sn (n=7) sozusagen randseitig (im Rand Z2-11) des Zündkammerdoms Z2-1 angeordnet.

Durch diese Ausgestaltung lassen sich die reaktiven Gasstrahlen E1 bis E7 in vorteilhafter Weise (je nach Ausführungsvariante der Ausrichtung der Schusskanalachsen) in die gewünschte Richtung fokussieren, sodass die erzeugten Flammenkeulen der reaktiven Gasstrahlen En (n = 7) in ihrer endseitigen keulenartigen Ausbreitung (vergleiche Figur 2B) in genauerer Orientierung auf den gewünschten Bereich des primären Zündbereichs KM2-2 treffen und unter gutem Ausbrand des gasförmigen Kraftstoffs nach entsprechender Zündung der Hauptbrennraumladung die gewünschte Wirkung auf den Kolben K; K2 entfalten.

Die Öffnungen der Schusskanäle Sn (n=8-10) sind dabei in der Deckfläche des abgerundeten Kegelstumpfes (im zentralen Bereich des Zündkammerdomes Z2-2) angeordnet.

Durch diese Ausgestaltung lassen sich die reaktiven Gasstrahlen E8 bis E10 in vorteilhafter Weise je nach Ausführungsvariante der Ausrichtung der Schusskanalachsen SA7 bis SA10 in die gewünschte zentrale Richtung fokussieren, sodass die erzeugten Flammenkeulen der reaktiven Gasstrahlen E7 bis E10 in ihrer endseitigen keulenartigen Ausbreitung (vergleiche Figur 2B) auf den gewünschten Bereich des zentralen Zündbereichs KM2-3 orientiert sind, und unter gutem Ausbrand des gasförmigen Kraftstoffs nach entsprechender Zündung der Hauptbrennraumladung die gewünschte Wirkung auf den Kolben K; K2 entfalten.

Die Figur 2F verdeutlicht in einer schematischen Aufsicht von oben den Düsenbereich der Zündkammer Z2 gemäß der zweiten Ausführungsform, wobei die zehn Schusskanäle Sn (n=10) bzw. deren Öffnungen gezeigt sind, die sowohl randseitig im Rand Z2-11 des Zündkammerdomes Z2-1 als auch zentral im zentralen Bereich des Zündkammerdomes Z2-1 der Zündkammer Z2 angeordnet sind.

Die Figur 2F verdeutlicht in einer schematischen Aufsicht von oben den Düsenbereich der Zündkammer Z2 gemäß der zweiten Ausführungsform wie die 10 Schusskanäle Sn (n = 10) randseitig im Rand Z1-11 des Zündkammerdomes Z2-1 der Zündkammer Z1 und zentral der Zündkammer Z2 zusätzlich zu dem Höhenwinkel γn tangentenartig an dem zentralen Tangential-Kreis TD2 in dem sogenannten vorgebbaren Kippwinkelbereich angeordnet sind.

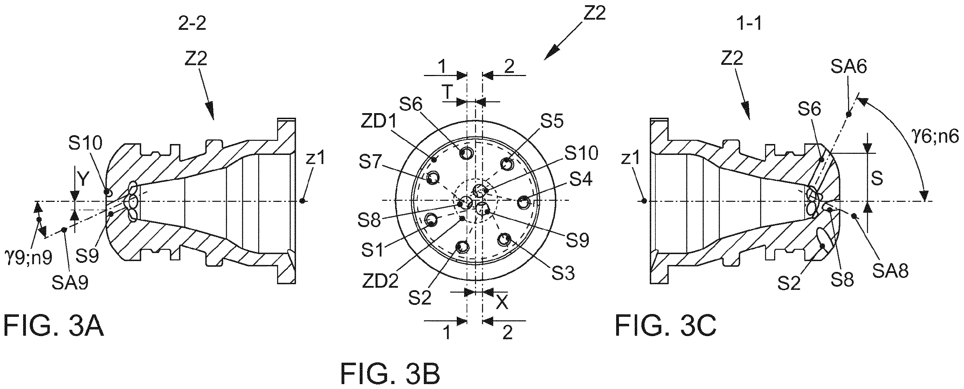

Ausgangspunkt für die nachfolgenden Erläuterungen ist die Figur 3B. Sie zeigt (analog zu der Figur 2F) eine schematische Draufsicht auf den Schusskanalbereich der Zündkammer Z2 mit primären und zentralen Schusskanalbohrungen in einem Schnitt 1-1 im primären Bereich der Zündkammer Z2 (gemäß Figur 3C) und einem Schnitt 2-2 im zentralen Bereich der Zündkammer Z2 (Figur 3A).

Im Schnitt 1-1 gemäß den Figuren 3B und 3C in einer Zusammenschau sind die Austrittspunkte der Schusskanalbohrungen der Schusskanäle S2, S6 und S8 der reaktiven Gasstrahlen E2, E6, E8 geschnitten, sodass die Austrittspunkte aus der zweiten Zündkammer Z2 definiert sind, wobei anhand des Austrittspunktes der Schusskanalbohrung des Schusskanales S6 deutlich wird, dass der Austrittspunkt mit einem Höhenwinkel γ6 gegenüber der Längsachse z1 der Zündkammer Z2 ausgerichtet, insbesondere schirmartig aufgespannt ist, und somit um einen Betrag S (vergleiche Figur 3C) von der Längsachse z1 der Zündkammer Z2 abweicht. Ferner wird durch die Darstellung in Figur 3B deutlich, dass der Austrittspunkt der Schusskanalbohrung des Schusskanales S6 bei einem vorgebbaren Kippwinkel >0°um den Betrag T von der Mitte (bei z1) der Zündkammer Z2 abweicht beziehungsweise exzentrisch verdrallt ist, sodass die Schusskanalachse SA6 (vergleiche auch Figuren 1F und 2F) in der Darstellung gemäß Figur 3B genau auf der Schnittlinie des Schnittes 1-1 liegt. Die Angaben können auf alle primären Austrittspunkte der Schusskanalbohrungen der Schusskanäle Sn (n=1 bis 7) der ersten und zweiten Zündkammer Z1, Z2 (erste und zweite Ausführungsform) übertragen werden, wobei die Beträge S und T in oben beschriebenen Bereichen variabel sind.

Im Schnitt 2-2 gemäß den Figuren 3A und 3B in einer Zusammenschau sind die Austrittspunkte der Schusskanalbohrungen der Schusskanäle S9 und S10 der reaktiven Gasstrahlen E9, E10, E8 geschnitten, sodass die Austrittspunkte aus der zweiten Zündkammer Z2 definiert sind, wobei anhand des Austrittspunktes der Schusskanalbohrung des Schusskanales S6 deutlich wird, dass der Austrittspunkt mit einem Höhenwinkel γ9 gegenüber der Längsachse z1 der Zündkammer Z2 ausgerichtet, insbesondere schirmartig aufgespannt ist, und somit um einen Betrag Y (vergleiche Figur 3A) von der Längsachse z1 der Zündkammer Z2 abweicht. Ferner wird durch die Darstellung in Figur 3B deutlich, dass der Austrittspunkt der Schusskanalbohrung des Schusskanales S9 bei einem vorgebbaren Kippwinkel >0° um den Betrag X von der Mitte (bei z1) der Zündkammer Z2 abweicht beziehungsweise exzentrisch verdrallt ist, sodass die Schusskanalachse SA9 (vergleiche Figur 2F) in der Darstellung gemäß Figur 3B genau auf der Schnittlinie des Schnittes 2-2 liegt. Die Angaben können auf alle zentralen Austrittspunkte der Schusskanalbohrungen der Schusskanäle Sn (n=8 bis 10) der zweiten Zündkammer Z2 (zweite Ausführungsform) übertragen werden, wobei die Beträge Y und X in den beschriebenen Bereichen variabel sind.

Weitere Vorteile :
Auch die Kombination der Zündkammerausgestaltung Z2 mit dem Zündkammerdom Z2-1 mit randseitigen Schusskanälen Sn (n=7) und zentralen Schusskanälen Sn (n=8-10) zur Erzeugung der reaktiven Gasstrahlen En (n=10), die in die beschriebene hemisphärische Kolbenmulde KM2 einschießen, führt zu einer Verbrennung von gasförmigem Kraftstoff mit geringen Wandwärmeverlusten und einem sehr guten Ausbrand, wodurch der aus herkömmlichen Lösungen mit scharfer Quetschkante in einem durch eine Zündkammer gezündeten mageren Erdgasbrennverfahren der verzögerte Ausbrand in der Quetschfläche und in der Muldenmitte verhindert wird, wie die Versuche eindeutig gezeigt haben.

Wie bereits ausgeführt, wird der schlechte Ausbrand im Quetschbereich der zu hohen HC-Emissionen vermieden. Darüber hinaus wird der schlechte Ausbrand des Kraftstoffes im Feuersteg nach Austritt aus dem Feuersteg, der zu einer verschleppten Verbrennung führt, ebenfalls vermieden, damit es bei der Verbrennung nicht zu Wirkungsgradeinbußen kommt. Der schlechte Ausbrand in diesen Bereichen wird durch die vorab beschriebenen Lösungen behoben.

Die zweite Ausführungsform weist die drei zusätzlichen Schusskanäle S8, S9, S10 auf. Diese drei zusätzlichen zentral angeordneten Schusskanäle S8, S9, S10 haben einen großen Einfluss auf den Verbrennungsprozess. Die durchgeführten Untersuchungen zeigen einen gegenüber der ersten Ausführungsform stärkeren Druckanstieg im Inneren der Zündkammer Z2 und im zweiten Hauptbrennraum B2, der zu einem größeren und früheren Spitzendruck insbesondere im Hauptbrennraum B2 führt.

Außerdem bewirkt die korrespondierende erhöhte Wärmeabgaberate eine schnellere Brennstoffumsetzung in einer sehr frühen Verbrennungsphase, sodass sich die Flammenfront in der Zündkammer Z2 und die Flammenkeulen der zehn reaktiven Gasstrahlen En (n=10) in der Zündkammer Z2 und schließlich in dem zweiten Hauptbrennraum B2 gegenüber der ersten Ausführungsform mit sieben reaktiven Gasstrahlen En (n=7) in dem ersten Hauptbrennraum B1 früher bildet und ausbreitet.

Die zentral angeordneten zusätzlichen Schusskanäle S8, S9, S10 führen zu einer Verringerung der kinetischen Energie (TKE-Intensität↓) im zweiten Hauptbrennraum B2 gemäß der zweiten Ausführungsform, wodurch die Flammenausbreitung im zweiten Hauptbrennraum B2 theoretisch verlangsamt wird. Jedoch bewirken die drei zentral angeordneten Schusskanäle S8, S9, S10 und die damit erzeugten reaktiven Gasstrahlen E8, E9, E10 und die durch sie induzierte Strömung im zweiten Hauptbrennraum B2 eine Verbesserung der Gemischbildung im zweiten Hauptbrennraum B2, der den Nachteil der Verlangsamung der Flammenausbreitung mehr als aufwiegt, da eine bessere Erfassung der Hauptkammerladung und eine größere Flammenfrontfläche der Flammenfront durch die hinzukommenden reaktiven Gasstrahlen E8, E9, E10 und somit insgesamt eine schnellere Verbrennung bewirkt wird.

Darüber hinaus wurde in vorteilhafter Weise festgestellt, dass die dichtere Anordnung der zentral angeordneten zusätzlichen Schusskanäle S8, S9, S10 und die damit erzeugten reaktiven Gasstrahlen E8, E9, E10 gemäß der zweiten Ausführungsform dazu führt, dass sich die Zündenergie mehr auf den unteren Teil des zweiten Hauptbrennraumes B2 fokussiert, wodurch im Wesentlichen ein großer aus den reaktiven Gasstrahlen E8, E9, E10 gebildeter Zentralstrahl gebildet wird in dem die Zündenergie fokussiert ist.

Der Zentralstrahl mithin die den Zentralstrahl bildenden reaktiven Gasstrahlen E8, E9, E10 breitet/breiten sich nach Zündung der Hauptbrennraumladung schnell zur Kolbenwand hin aus, wobei die radiale Ausdehnung dafür sorgt, dass der gasförmige Kraftstoff in dem Hauptbrennraumvolumen unterhalb des Zündkammerdomes Z2-1 gut ausbrennt.

Es wird deutlich, dass die Variation der Düsenanordnung deutlich unterschiedliche Verbrennungsvorgänge bewirken kann. Durch die Untersuchungen wird somit der angenommene starke Einfluss auf den Verbrennungsprozess der Anzahl und Anordnung der Schusskanäle Sn und die damit erzeugten reaktiven Gasstrahlen En bestätigt.

Darüber hinaus zeigen die Ausführungsformen eine verbesserte Zündbarkeit in der jeweiligen Zündkammer Z1 und Z2, wobei die Zündkammerausgestaltung Z2 eine noch verbesserte Zündung des gasförmigen Kraftstoffs gegenüber der ersten Zündkammmerausgestaltung Z1 zeigt.

Die erläuterte Kammerbauweise mit einem Zündkammerraum in der Zündkammer Z1, Z2 und einem Hauptbrennraum B1, B2 im Zylinder Z ermöglicht in den beschriebenen Kolbenmulden KM1, KM2 der beiden Ausführungsform eine schnelle Wärmeabgabe und eine effiziente Verbrennung.

Insbesondere bei der Kolbenmulde KM1 "Omega-rounded" trägt der kuppelartig erhöhte zentrale Bereich KM1-3 zu einer verbesserten Volumenausnutzung durch eine Senkung von ungenutztem Volumen im ersten Hauptbrennraum B1 bei, insbesondere dann, wenn nur sieben Schusskanäle Sn (n=7) und die damit erzeugten reaktiven Gasstrahlen En (n=7) in der Zündkammer Z1 ausgebildet sind.

Die abgerundeten Quetschkanten KM1-1 und KM2-1 sorgen in vorteilhafter Weise bei beiden Ausführungsformen dafür, dass sich Kraftstoffströmung nach Zündung der Hauptbrennraumladung zur Innenwandung des Zylinders Z hin verbessert, wodurch sich in vorteilhafter Weise lokal die Verbrennung des Gemisches im Bereich der Quetschkanten KM1-1 und KM2-1 verbessert. Mit anderen Worten, die Untersuchungen zeigen den positiven Einfluss der Kolbenquetschkantenverrundung, insbesondere in Bezug auf die späte Verbrennungsphase in der es zu einer vorteilhaften Verbrennung im Quetschkantenbereich KM1-1, KM2-1 kommt.

Darüber hinaus bestätigt, insbesondere die zeitliche Entwicklung der Kraftstoffausbereitung, insbesondere in der Omega-gerundeten Kolbenmulde KM1 die effiziente Kraftstoffumwandlung am Ende der Verbrennungsphase innerhalb der Kolbenmulde KM1. Die lokale Strömung, die durch den abgerundeten Kolben K1 erzeugt wird, fördert die Verbrennung im Randbereich KM1-1 im ersten Hauptbrennraum B1 des Zylinders Z und es kommt in vorteilhafter Weise zu keinen unverbrannten Kraftstofftaschen, sodass auch bei dieser Ausführungsform erfindungsgemäß eine geringere Menge an THC-Emissionen die Folge ist.

Das beschriebene Verfahren und die Ausgestaltung ist, wie oben angesprochen, grundsätzlich auch bei einer passiven Zündkammer durchführbar, bei der das Kraftstoff/Luft-Gemisch in der Zündkammer Z1, Z2 λ_{Zündkammer} = λ_{Hauptbrennraum} des Kraftstoff/Luft-Gemischs in dem Hauptbrennraum B1, B2 ist.

### Bezugszeichenliste

Bezugszeichen der Figuren 1A-1F
   - V: Ein- und Auslassventile
   - z1: Längsachse von Z1 und K1
   - Z1: erste Zündkammer mit Zündkammerraum
   - K1: Kolben, erste Ausführungsform
   - K: Kolben
   - Z: Zylinder
   - KM1-1: abgerundete Quetschkante
   - KM1-2: primärer Zündbereich
   - KM1-3: zentraler Bereich
   - B1-1: Hauptbrennraumdach
   - α: stumpfer Quetschkantenwinkel
   - B1: erster Hauptbrennraum
   - KM1: Kolbenmulde "abgerundete Omega-Form"
   - γn: Winkel zwischen der Längsachse z1 und der Schusskanalachse SAn der Schusskanäle (n = 7)
   - Z1-1: Zündkammerdom
   - Z1-11: Rand des Zündkammerdomes Z1-1
   - En: reaktive Gasstrahlen (n = 7)
   - Sn: Schusskanäle (n = 7)
   - SAn: Schusskanalachsen (n=7)
   - ZD1: Durchmesser primärer Zündkammerkreis
   - TD1: Durchmesser primärer Tangential-Kreis
   - S, T: Abstandsmaß der Schusskanalbohrungen der Schusskanäle (n = 7) von z1
Bezugszeichen der Figuren 2A-2F
   - V: Ein- und Auslassventile
   - z1: Längsachse von Z2 und K2
   - Z2: zweite Zündkammer mit Zündkammerraum
   - K2: Kolben; zweite Ausführungsform
   - K: Kolben
   - Z: Zylinder
   - KM2-1: abgerundete Quetschkante
   - KM2-2: primärer Zündbereich
   - KM2-3: zentraler Bereich
   - B2-1: Hauptbrennraumdach
   - α: stumpfer Quetschkantenwinkel
   - B2: zweiter Hauptbrennraum
   - KM2: Kolbenmulde "abgerundete hemisphärische Form"
   - γn: Winkel zwischen der Längsachse z1 und der Schusskanalachse SAn der Schusskanäle (n = 7)
   - Z2-1: Zündkammerdom
   - Z2-11: Rand des Zündkammerdomes Z2-1
   - En: reaktive Gasstrahlen (n = 10)
   - Sn: Schusskanäle (n= 10)
   - SAn: Schusskanalachsen (n=10)
   - ZD1: Durchmesser primärer Zündkammerkreis
   - TD1: Durchmesser primärer Tangential-Kreis
   - ZD2: Durchmesser zentraler Zündkammerkreis
   - TD2: Durchmesser zentraler Tangential-Kreis
   - S, T: Abstandsmaß der Schusskanalbohrungen der Schusskanäle (S1 bis S7) von z1
   - Y, X: Abstandsmaß der Schusskanalbohrungen der Schusskanäle (S8 bis S10) von z1

## Patentansprüche

1. Verbrennungskraftmaschine, umfassend wenigstens einen in einem Zylinder (Z) ausgebildeten Hauptbrennraum (B1, B2) oberhalb eines beweglichen Kolbens (K; K2), der in dem Zylinder (Z) angeordnet ist, wobei der Hauptbrennraum (B2) aus einem Zündkammerraum einer Zündkammer (Z2), die mit einem Brennstoffzufuhrsystem verbunden ist, mit einer Zündkammerladung gasförmigen Kraftstoffs versorgt wird, wobei dem wenigstens einen Hauptbrennraum (B2) zudem eine Hauptbrennraumladung gasförmigen Kraftstoffs zugeführt wird, wobei der Zündkammer (Z2) eine Zündquelle zugeordnet ist, die den gasförmigen Brennstoff in dem Zündkammerraum der Zündkammer (Z2) zu einem vorgebbaren Zeitpunkt zündet, wodurch gezündete reaktive Gasstrahlen (En) in den Hauptbrennraum (B2) schießen und im Hauptbrennraum (B2) unter Zündung der Hauptbrennraumladung gemeinsam mit der Zündkammerladung verbrennen, wonach das Abgas aus dem mindestens einen Hauptbrennraum (B2) abgeführt wird, wobei die Zündkammer (Z2) Schusskanäle (Sn) zur gerichteten Einbringung von gezündeten reaktiven Gasstrahlen (En) in den Hauptbrennraum (B2) aufweist, der von einem Hauptbrennraumdach (B2-1) des Zylinders (Z) und einer in dem beweglichen Kolben (K; K2) ausgebildeten Kolbenmulde (KM2) begrenzt ist, **dadurch gekennzeichnet, dass**
sieben reaktive Gasstrahlen (En; n = 7) bei einer vorgebbaren Position (zOT) des beweglichen Kolbens (K; K2) im Zylinder (Z) auf einen primären Zündbereich (KM2-2) der Kolbenmulde (KM2) des Kolbens (K; K2) gerichtet sind, der zwischen einem zentralen Bereich (KM2-3) und einem im Randbereich der Kolbenmulde liegenden Quetschkantenbereich (KM2-1) einer geometrisch spezifisch ausgebildeten hemisphärischen Kolbenmulde (KM2) liegt, und drei weitere reaktive Gasstrahlen (En; n = 8 bis 10) auf den zentralen Bereich (KM2-3) der geometrisch spezifisch ausgebildeten Kolbenmulde (KM2) in der hemisphärischen Form gerichtet sind.

2. Verbrennungskraftmaschine nach Anspruch 1, **dadurch gekennzeichnet, dass** die spezifisch ausgebildete Kolbenmulde (KM2) einen Quetschkantenbereich (KM2-1) mit abgerundeten Quetschkanten (KM2-1) aufweist.

3. Verbrennungskraftmaschine nach Anspruch 2, **dadurch gekennzeichnet, dass** die abgerundeten Quetschkanten (KM2-1) der spezifisch ausgebildeten hemisphärischen Kolbenmulde (KM2) im Quetschkantenbereich (KM2-1) einen stumpfen Quetschkantenwinkel (α) aufweisen, der zwischen einer Geraden entlang des Hauptbrennraumdachs (B2-1) und einer Tangente entlang eines Randbereiches der Kolbenmulden (KM1, KM2) auf der Kolbenseite des beweglichen Kolbens (K; K2) gebildet ist.

4. Verbrennungskraftmaschine nach Anspruch 1, **dadurch gekennzeichnet, dass** die sieben reaktiven Gasstrahlen (En; n = 7), die bei der vorgegebenen Position (zOT) des beweglichen Kolbens (K; K2) im Zylinder (Z) auf den primären Zündbereich (KM2-2) der hemisphärischen Kolbenmulde (KM2) des Kolbens (K; K2) gerichtet sind, in einem Höhenwinkelbereich zwischen (γn) = 30° und (γn) = 80° radial zur Längserstreckung (z1) der Verbrennungskraftmaschine (Z, K) ausgerichtet sind, wobei ein bevorzugter Winkel (γn) innerhalb des Höhenwinkelbereichs = 65° beträgt, wobei der Winkel (γn) zwischen der Längserstreckung (z1) der Verbrennungskraftmaschine (Z, K) und den Schusskanalachsen der Schusskanäle (Sn) der sieben reaktiven Gasstrahlen (En; n = 7) definiert ist.

5. Verbrennungskraftmaschine nach Anspruch 1, **dadurch gekennzeichnet, dass** die drei weiteren reaktiven Gasstrahlen (En; n = 8 bis 10) bei der vorgegebenen Position (zOT) des beweglichen Kolbens (K; K1, K2) im Zylinder (Z) auf den zentralen Bereich (KM2-3) der geometrisch spezifisch ausgebildeten hemisphärischen Kolbenmulde (KM2) gerichtet sind, in einem Höhenwinkelbereich zwischen (γn) = 0° und (γn) = 30° radial zur Längserstreckung (z1) der Verbrennungskraftmaschine (Z, K) ausgerichtet sind, wobei ein bevorzugter Winkel (γn) innerhalb des Höhenwinkelbereichs = 10° beträgt, wobei der Winkel (γn) zwischen der Längserstreckung (z1) der Verbrennungskraftmaschine (Z, K) und der Schusskanalachse des Schusskanales (Sn) der drei weiteren reaktiven Gasstrahlen (En; n = 8 bis 10) definiert ist.

6. Verbrennungskraftmaschine nach Anspruch 4 oder 5, **dadurch gekennzeichnet, dass** die sieben reaktiven Gasstrahlen (En; n = 7) und/oder die drei weiteren reaktiven Gasstrahlen (En; n = 8 bis 10) zusätzlich zur radialen Ausrichtung gegenüber der Längserstreckung (z1) der Verbrennungskraftmaschine (Z, K) in einem Kippwinkelbereich in Umfangsrichtung gegenüber der Achse (z1) in Längserstreckung der Verbrennungskraftmaschine (Z, K) gesehen, gekippt sind.

7. Verbrennungskraftmaschine nach Anspruch 1, **dadurch gekennzeichnet, dass** die Zündkammer (Z2) eine äußere Mantelfläche in der Form eines abgerundeten Kegelstumpfes aufweist, wobei die Öffnungen der Schusskanäle (Sn; n=7) der sieben reaktiven Gasstrahlen (En; n = 7) in einem Rand (Z1-11, Z2-11) eines Zündkammerdoms (Z2-1) außerhalb einer zu dem beweglichen Kolben (K) gerichteten Deckfläche des Kegelstumpfes angeordnet sind.

8. Verbrennungskraftmaschine nach Anspruch 1, **dadurch gekennzeichnet, dass** die Zündkammer (Z2) die äußere Mantelfläche in der Form eines abgerundeten Kegelstumpfes aufweist, wobei die Öffnungen der Schusskanäle (Sn; n = 8 bis 10) der drei weiteren reaktiven Gasstrahlen (En; 8 bis 10) im zentralen Bereich (KM2-3) in der Deckfläche des Kegelstumpfes des zu dem beweglichen Kolben (K) gerichteten Zündkammerdoms (Z2-1) angeordnet sind.

## Claims

1. Internal combustion engine, comprising at least one main combustion chamber (B1, B2) formed in a cylinder (Z) above a movable piston (K; K2), which is arranged in the cylinder (Z), wherein the main combustion chamber (B2) is supplied with an ignition chamber charge of gaseous fuel from an ignition chamber space of an ignition chamber (Z2), which is connected to a fuel supply system, wherein the at least one main combustion chamber (B2) is also supplied with a main combustion chamber charge of gaseous fuel, wherein the combustion chamber (Z2) is assigned an ignition source which ignites the gaseous fuel in the ignition chamber space of the ignition chamber (Z2) at a predefinable time, as a result of which ignited reactive gas jets (En) shoot into the main combustion chamber (B2) and burn in the main combustion chamber (B2) upon ignition of the main combustion chamber charge together with the ignition chamber charge, after which the exhaust gas is discharged from the at least one main combustion chamber (B2), wherein the ignition chamber (Z2) has firing channels (Sn) for the targeted introduction of ignited reactive gas jets (En) into the main combustion chamber (B2) which is delimited by a main combustion chamber roof (B2-1) of the cylinder (Z) and by a piston bowl (KM2) formed in the movable piston (K; K2), **characterized in that** at a predefinable position (zOT) of the movable piston (K; K2) in the cylinder (Z), seven reactive gas jets (En; n = 7) are directed onto a primary ignition region (KM2-2) of the piston bowl (KM2) of the piston (K; K2), said ignition region being located between a central region (KM2-3) and a squeezing edge region (KM2-1) of a geometrically specifically designed hemispherical piston bowl (KM2), which squeezing edge region lies in the edge region of the piston bowl, and three further reactive gas jets (En; n = 8 to 10) are directed onto the central region (KM2-3) of the geometrically specifically designed piston bowl (KM2) in the hemispherical shape.

2. Internal combustion engine according to Claim 1, **characterized in that** the specifically designed piston bowl (KM2) has a squeezing edge region (KM2-1) with rounded squeezing edges (KM2-1).

3. Internal combustion engine according to Claim 2, **characterized in that** the rounded squeezing edges (KM2-1) of the specifically designed hemispherical piston bowl (KM2) has, in the squeezing edge region (KM2-1), an obtuse squeezing edge angle (α) which is formed between a straight line along the main combustion chamber roof (B2-1) and a tangent along an edge region of the piston bowls (KM1, KM2) on the piston side of the movable piston (K; K2).

4. Internal combustion engine according to Claim 1, **characterized in that** the seven reactive gas jets (En; n = 7), which at the predefined position (zOT) of the movable piston (K; K2) in the cylinder (Z) are directed onto the primary ignition region (KM2-2) of the hemispherical piston bowl (KM2) of the piston (K; K2), are oriented radially with respect to the longitudinal extent (z1) of the internal combustion engine (Z, K) at an elevation angle range of between (yn) = 30° and (yn) = 80°, wherein a preferred angle (yn) within the elevation angle range = 65°, wherein the angle (yn) is defined between the longitudinal extent (z1) of the internal combustion engine (Z, K) and the firing channel axes of the firing channels (Sn) of the seven reactive gas jets (En; n = 7).

5. Internal combustion engine according to Claim 1, **characterized in that** the three further reactive gas jets (En; n = 8 to 10) at the predefined position (zOT) of the movable piston (K; K1, K2) in the cylinder (Z) are directed onto the central region (KM2-3) of the geometrically specifically designed hemispherical piston bowl (KM2), are oriented radially with respect to the longitudinal extent (z1) of the internal combustion engine (Z, K) at an elevation angle range of between (yn) = 0° and (yn) = 30°, wherein a preferred angle (yn) within the elevation angle range = 10°, wherein the angle (yn) is defined between the longitudinal extent (z1) of the internal combustion engine (Z, K) and the firing channel axis of the firing channel (Sn) of the three further reactive gas jets (En; n = 8 to 10).

6. Internal combustion engine according to Claim 4 or 5, **characterized in that** the seven reactive gas jets (En; n = 7) and/or the three further reactive gas jets (En; n = 8 to 10), in addition to the radial orientation in relation to the longitudinal extent (z1) of the internal combustion engine (Z, K), are tilted in a tilting angle range in the circumferential direction in relation to the axis (z1), as seen in the longitudinal extent of the internal combustion engine (Z, K).

7. Internal combustion engine according to Claim 1, **characterized in that** the ignition chamber (Z2) has an outer lateral surface in the form of a rounded truncated cone, wherein the openings of the firing channels (Sn; n = 7) of the seven reactive gas jets (En; n = 7) are arranged in an edge (Z1-11, Z2-11) of an ignition chamber dome (Z2-1) outside a truncated cone top surface, which is directed towards the movable piston (K).

8. Internal combustion engine according to Claim 1, **characterized in that** the ignition chamber (Z2) has the outer lateral surface in the form of a rounded truncated cone, wherein the openings of the firing channels (Sn; n = 8 to 10) of the three further reactive gas jets (En; 8 to 10) are arranged in the central region (KM2-3) in the truncated cone top surface of the ignition chamber dome (Z2-1), which is directed towards the movable piston (K).

## Revendications

1. Moteur à combustion interne, comprenant au moins un espace de combustion principal (B1, B2) réalisé dans un cylindre (Z) au-dessus d'un piston mobile (K ; K2) agencé dans le cylindre (Z), l'espace de combustion principal (B2) étant alimenté par une charge de chambre d'allumage de carburant gazeux à partir d'un espace de chambre d'allumage d'une chambre d'allumage (Z2) reliée à un système d'amenée de combustible, une charge d'espace de combustion principal de carburant gazeux étant également amenée à l'au moins un espace de combustion principal (B2), une source d'allumage étant associée à la chambre d'allumage (Z2), laquelle allume le combustible gazeux dans l'espace de chambre d'allumage de la chambre d'allumage (Z2) à un moment prédéterminable, moyennant quoi des jets de gaz réactifs allumés (En) sont projetés dans l'espace de combustion principal (B2) et brûlent dans l'espace de combustion principal (B2) conjointement avec la charge de chambre d'allumage en allumant la charge d'espace de combustion principal, après quoi le gaz d'échappement est évacué de l'au moins un espace de combustion principal (B2), la chambre d'allumage (Z2) présentant des canaux de projection (Sn) pour l'introduction dirigée de jets de gaz réactifs allumés (En) dans l'espace de combustion principal (B2), qui est délimité par un toit d'espace de combustion principal (B2-1) du cylindre (Z) et une cuvette de piston (KM2) réalisée dans le piston mobile (K ; K2), **caractérisé en ce que** sept jets de gaz réactifs (En ; n = 7) sont dirigés, à une position prédéterminable (zOT) du piston mobile (K ; K2) dans le cylindre (Z), vers une zone d'allumage primaire (KM2-2) de la cuvette de piston (KM2) du piston (K ; K2), laquelle est située entre une zone centrale (KM2-3) et une zone d'arête d'écrasement (KM2-1), située dans la zone de bord de la cuvette de piston, d'une cuvette de piston hémisphérique (KM2) réalisée spécifiquement en termes de géométrie, et trois autres jets de gaz réactifs (En ; n = 8 à 10) sont dirigés vers la zone centrale (KM2-3) de la cuvette de piston (KM2) réalisée spécifiquement en termes de géométrie, de la forme hémisphérique.

2. Moteur à combustion interne selon la revendication 1, **caractérisé en ce que** la cuvette de piston réalisée spécifiquement (KM2) présente une zone d'arête d'écrasement (KM2-1) avec des arêtes d'écrasement arrondies (KM2-1).

3. Moteur à combustion interne selon la revendication 2, **caractérisé en ce que** les arêtes d'écrasement arrondies (KM2-1) de la cuvette de piston hémisphérique réalisée spécifiquement (KM2) présentent, dans la zone des arêtes d'écrasement (KM2-1), un angle d'arête d'écrasement obtus (α) formé entre une ligne droite le long du toit d'espace de combustion principal (B2-1) et une tangente le long d'une zone de bord des cuvettes de piston (KM1, KM2) sur le côté de piston du piston mobile (K ; K2).

4. Moteur à combustion interne selon la revendication 1, **caractérisé en ce que** les sept jets de gaz réactifs (En ; n = 7) qui, à la position prédéterminée (zOT) du piston mobile (K ; K2) dans le cylindre (Z), sont dirigés vers la zone d'allumage primaire (KM2-2) de la cuvette de piston hémisphérique (KM2) du piston (K ; K2) sont orientés radialement par rapport à l'extension longitudinale (z1) du moteur à combustion interne (Z, K) dans une plage d'angles de hauteur comprise entre (γn) = 30° et (γn) = 80°, un angle préféré (γn) à l'intérieur de la plage d'angles de hauteur étant = 65°, l'angle (γn) étant défini entre l'extension longitudinale (z1) du moteur à combustion interne (Z, K) et les axes de canal de projection des canaux de projection (Sn) des sept jets de gaz réactifs (En ; n = 7).

5. Moteur à combustion interne selon la revendication 1, **caractérisé en ce que** les trois autres jets de gaz réactifs (En ; n = 8 à 10) sont dirigés, à la position prédéterminée (zOT) du piston mobile (K ; K1, K2) dans le cylindre (Z), vers la zone centrale (KM2-3) de la cuvette de piston hémisphérique (KM2) réalisée spécifiquement en termes de géométrie, sont orientés radialement par rapport à l'extension longitudinale (z1) du moteur à combustion interne (Z, K) dans une plage d'angles de hauteur comprise entre (γn) = 0° et (γn) = 30°, un angle préféré (γn) dans la plage d'angles de hauteur étant = 10°, l'angle (γn) étant défini entre l'extension longitudinale (z1) du moteur à combustion interne (Z, K) et l'axe de canal de projection du canal de projection (Sn) des trois autres jets de gaz réactifs (En ; n = 8 à 10).

6. Moteur à combustion interne selon la revendication 4 ou 5, **caractérisé en ce que** les sept jets de gaz réactifs (En ; n = 7) et/ou les trois autres jets de gaz réactifs (En ; n = 8 à 10) sont inclinés, en plus de l'orientation radiale par rapport à l'extension longitudinale (z1) du moteur à combustion interne (Z, K), dans une plage d'angles d'inclinaison dans la direction circonférentielle par rapport à l'axe (z1) vu dans l'extension longitudinale du moteur à combustion interne (Z, K).

7. Moteur à combustion interne selon la revendication 1, **caractérisé en ce que** la chambre d'allumage (Z2) présente une surface d'enveloppe extérieure sous la forme d'un cône tronqué arrondi, les ouvertures des canaux de projection (Sn ; n = 7) des sept jets de gaz réactifs (En ; n = 7) étant agencées dans un bord (Z1-11, Z2-11) d'un dôme de chambre d'allumage (Z2-1) à l'extérieur d'une surface de recouvrement du cône tronqué dirigée vers le piston mobile (K).

8. Moteur à combustion interne selon la revendication 1, **caractérisé en ce que** la chambre d'allumage (Z2) présente la surface d'enveloppe extérieure sous la forme d'un cône tronqué arrondi, les ouvertures des canaux de projection (Sn ; n = 8 à 10) des trois autres jets de gaz réactifs (En ; 8 à 10) étant agencées dans la zone centrale (KM2-3) dans la surface de recouvrement du cône tronqué du dôme de chambre d'allumage (Z2-1) dirigé vers le piston mobile (K).
